(19) Europäisches Patentamt
European Patent Office
Office européen des brevets

(11) **EP 3 874 296 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **18803883.0**

(22) Anmeldetag: **02.11.2018**

(51) Internationale Patentklassifikation (IPC):
*G01S 17/88* $^{(2006.01)}$   *G01S 17/42* $^{(2006.01)}$
*E01C 19/00* $^{(2006.01)}$   *E01C 19/48* $^{(2006.01)}$
*G01S 7/48* $^{(2006.01)}$   *G05D 1/00* $^{(2024.01)}$

(52) Gemeinsame Patentklassifikation (CPC):
**G01S 17/88; E01C 19/006; E01C 19/48; G01S 7/4802; G01S 7/4808; G01S 17/42; G05D 1/0236**

(86) Internationale Anmeldenummer:
**PCT/EP2018/080045**

(87) Internationale Veröffentlichungsnummer:
**WO 2020/088782 (07.05.2020 Gazette 2020/19)**

(54) **SENSORSYSTEM FÜR EINEN STRASSENFERTIGER**

SENSOR SYSTEM FOR A ROAD PAVER

SYSTÈME DE CAPTEURS POUR UN FINISSEUR DE ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.09.2021 Patentblatt 2021/36**

(73) Patentinhaber: **MOBA Mobile Automation AG**
**65555 Limburg (DE)**

(72) Erfinder: **HORN, Alfons**
**65555 Limburg (DE)**

(74) Vertreter: **Pfitzner, Hannes et al**
**Schoppe, Zimmermann, Stöckeler Zinkler, Schenk & Partner mbB Patentanwälte Radlkoferstraße 2 81373 München (DE)**

(56) Entgegenhaltungen:
**DE-A1- 10 060 903     DE-A1- 102011 113 752
US-A- 4 647 784     US-A1- 2018 164 829
US-B2- 9 587 937**

## Beschreibung

Ausführungsbeispiele der vorliegenden Erfindung beziehen sich auf ein Sensorsystem für eine Baumaschine, insbesondere für einen Straßenfertiger. Weitere Ausführungsbeispiele beziehen sich auf eine Baumaschine bzw. insbesondere einen Straßenfertiger mit einem entsprechenden Sensorsystem. Zusätzliche Ausführungsbeispiele beziehen sich auf ein Verfahren zur Ermittlung eines Abstands zu einer Referenz und/oder eines Winkels gegenüber der Referenz. Zusätzliche Ausführungsbeispiele beziehen sich auf ein Computerprogramm. Bevorzugte Ausführungsbeispiele beziehen sich auf einen Lenksensor für einen Straßenfertiger sowie einen Höhensensor zur Nivellierung einer Einbaubohle für einen Straßenfertiger.

Betrachtet man die Hauptaufgaben vom Straßenfertiger in der Praxis, so ist neben dem hochgenauen Nivellieren der Bohle auch eine präzise Lenkung notwendig. Diese wird heute in der Regel vom Fertiger-Bedienpersonal manuell ausgeführt. Für einen möglichst genauen Einbau muss dabei der Fertigerfahrer nach einer vorgegebenen Referenz die Lenckorrekturen so ausführen, dass der Fertiger möglichst parallel und im gleichen Abstand zu dieser Referenz fährt. Unkorrektheiten in der Lenkung sowie einwirkende Störgrößen bedingen einer Lenkkorrektur an der Bohle, die vom Bohlenpersonal über die Steuerung vom ausfahrbaren Teil der Bohle vorgenommen wird. Nur das kontinuierliche und präzise Einstellen der Lenkung vom Traktorteil des Fertigers und das Nachführen vom ausfahrbaren Bohlenteil garantieren den korrekten Straßenverlauf, der durch die Referenz vorgegeben ist.

Eine Automatisierung vom gesamten Lenkprozess (Traktor und Bohle) könnte das Bedienpersonal vom Straßenfertiger während des Asphalteinbaus erheblich entlasten. Aus dem Stand der Technik sind dazu aus US 4 647 784 A, US 9 587 937 B2, DE 10 2011 113752 A1, US 2018/164829 A1, DE 100 60 903 A1 und US 2018/237999 A1 verschiedene Sensorkonzepte bekannt. Für diese

Automatisierungsaufgabe ist ein Sensor, im folgenden Lenksensor genannt, notwendig, der in der Lage ist, sich auf die unterschiedlichen Referenztypen einzustellen, diese zu verfolgen und den Abstand zur Referenz hochgenau zu bestimmen. Deshalb besteht der Bedarf nach einem verbesserten Ansatz.

Aufgabe der vorliegenden Erfindung ist es ein Sensorkonzept zu schaffen, das einen verbesserten Kompromiss aus Genauigkeit, Adaptivität für unterschiedliche Einsatzgegebenheiten und Ergonomie schafft.

Die Aufgabe wird durch die unabhängigen Patentansprüche gelöst.

Ausführungsbeispiele der vorliegenden Erfindung schaffen ein Sensorsystem für eine Baumaschine, insbesondere für einen Straßenfertiger mit zumindest einem (ersten) Laserscanner und einer Auswerteeinheit.

Der erste Laserscanner ist beispielsweise seitlich auf der Baumaschine / dem Straßenfertiger selbst angeordnet. Der Laserscanner ist ausgebildet, um einen vorgegebenen Winkelbereich (z. B. Halbkreis bzw. 180-Grad-Bogen oder Vollkreis bzw. 360-Grad-Bogen oder anderer Winkelbereich) nach einem oder mehreren Objekten (wie z. B. einem Seil, einer Markierung oder einer Fräs- bzw. Bordsteinkante oder dergleichen) abzusuchen und um entsprechende Abstandswerte, die den Abstand zu dem einen oder mehreren (gefundenen) Objekten beschreiben, zusammen mit entsprechenden Intensitätswerten, die eine Intensität einer sich an dem einen oder den mehreren Objekten einstellenden Reflexion beschreiben, zu ermitteln. Diese Ermittlung erfolgt über den vorgegebenen Winkelbereich, und zwar mit Zuordnung der Abstandswerte bzw. Intensitätswerte zu einem jeweiligen Winkel innerhalb des vorgegebenen Winkelbereichs. Die Auswerteeinheit ist ausgebildet, um ausgehend von einem bekannten Muster, bestehend aus oder umfassend die Abstandswerte und die Intensitätswerte über die Winkel, ein Objekt als Referenz zusammen mit den zugehörigen Winkeln zu erkennen. Hier wird beispielsweise ausgehend von einem bestimmten Muster (Kombination der Variation der Intensitätswerte zusammen mit der Variation der Abstandswerte über die Winkel) der Bordstein bzw. das Seil erkannt oder sogar voneinander so differenziert, so dass dieses als Referenz dienen kann. Ferner ist die Auswerteeinheit ausgebildet, einen Abstand zu der Referenz und/oder einen Winkel gegenüber der Referenz zu bestimmen. Hierbei wird beispielsweise der Abstand zwischen dem ersten Laserscanner und der Referenz bestimmt und/oder ein Winkel von einer Referenzlage (z. B. einer Waagrechten) gegenüber der bestimmten Referenz.

Ausführungsbeispiele der vorliegenden Erfindung liegt die Erkenntnis zugrunde, dass Laserscanner, erweitert um eine entsprechende Auswertung, dazu geeignet sind, um Messdaten-Muster von unterschiedlichen Referenzen, die für die Lenkung oder für eine Höhenregelung/Nivellierung einer Einbaubohle eines Straßenfertigers bzw. allgemein Steuerung eines Straßenfertigers relevant sind, zu detektieren und zu differenzieren. Weiter wertet die Auswerteeinheit die Messwerte zugehörig zu der erfassten Referenz (kontinuierlich, insbesondere entlang der Fahrweges der Baumaschine) aus bzw. trackt diese, um eine (Quer-)Lage des Straßenfertigers gegenüber der Referenz (z. B. Abstand oder Winkel) zu bestimmen. Entsprechend einem ersten Einsatzszenario ist es vorteilhafterweise möglich durch den Einsatz des beschriebenen Sensorsystems die Lenkung des Straßenfertigers z.B. beim Asphalteinbau sehr präzise zu steuern. Die entsprechenden Abstandswerte werden hierzu beispielsweise an das Lenksystem weitergeleitet. Ausgehend von der Lage-Information kann in optionaler Weise die Lenkkorrekturen bzw. allgemein die Lenkaufgabe des Straßenfertigers bzw. allgemein die Steueraufgabe des Straßenfertigers automatisiert übernommen werden. Das entspricht einem Regelkreis für die Lenkung, der das Bedienpersonal weitgehend von der Lenkaufgabe entlastet.

Entsprechend einem Ausführungsbeispiel kann der Laserscanner alternativ oder zusätzlich auf einem ausfahrbaren Teil einer Bohle des Straßenfertigers (bzw. allgemein auf einem verschiebbaren Werkzeug der Baumaschine) angeordnet sein, um die (Quer-) Ausrichtung der Komponente bzgl. der Referenz zu ermitteln. Hieraus ergibt sich beispielsweise folgendes Einsatzszenario: Neben bzw. anstatt der Lenkaufgabe kann mit dem Sensorsystem vorteilhafterweise auch die Regelung der Bohlenbreite erfolgen: an den ausfahrbaren Teilen der Bohle angeordnete Lasersensor(en) dienen beispielsweise dazu, die ausfahrbaren Teile der Bohle einer Referenz nachzuführen. Die Aufgabe des so aufgebauten (alternativen oder zweiten) Regelkreises für die Regelung der ausfahrbaren Teile ist es also, den Abstand zur Referenz konstant zu halten indem die ausfahrbaren Bohlenteile entsprechend verschoben werden, um kleine Korrekturen der Breite / Querposition des aufzubringenden Belags zu ermöglichen.

Entsprechend einem Ausführungsbeispiel kann der Laserscanner alternativ oder zusätzlich am Zugarm bzw. in der Nähe vom Zugpunkt und/oder an der Bohle angeordnet sein, beispielsweise an einem Seitenblech der Bohle oder an einem ausfahrbaren Teil der Bohle des Straßenfertigers, und als Höhensensor eingesetzt oder verwendet werden, um alternativ oder zusätzlich zur Lenkinformation eine Höheninformation zu liefern. In vorteilhafter Weise kann mit dem Sensorsystem somit auch eine Höhenregelung bzw. Nivellierung der Bohle erfolgen. Bringt man den Laserscanner in der Nähe vom Zugpunkt an, so eignet sich dieser beispielsweise auch zur Höhenabtastung an einem Referenzseil. Dabei kann die Sensorposition vom Laserscanner bei der Verwendung als Höhensensor im Gegensatz zur Verwendung als Lenksensor unter Umständen eine abweichende (Montage-) Position besitzen, z.B. in der Nähe des Zugpunktes der Baumaschine, während die zu Lenkzwecken eingesetzten Sensoren an den Ecken angebracht sein können.

Wie oben bereits angedeutet, ist die Auswerteeinheit dazu ausgebildet, um anhand von unterschiedlichen bekannten Mustern unterschiedliche Typen von Objekten als Referenz zu erkennen. Beispielsweise kann entsprechend Ausführungsbeispielen die Auswerteeinheit mit einer Benutzerschnittstelle verbunden sein, über welche ein Benutzer die Möglichkeit hat, eine Benutzerauswahl hinsichtlich des Typs des zu erkennenden Objekts zu treffen. In Reaktion darauf sucht die Auswerteeinheit dann nach dem entsprechenden Typ des zu erkennenden Objekts, wie z. B. einer entsprechenden Fräskante oder einem entsprechenden Seil, das als Referenz verwendet werden soll.

Entsprechend Ausführungsbeispielen ist das zu erkennende Objekt ein Seil. Die Auswerteeinheit erkennt beispielsweise dann ein Seil, wenn ein Maximum der Intensitätswerte in Form eines (schmalen) Peaks vorliegt und wenn gleichzeitig ein Minimum der Abstandswerte ebenfalls eine Form eines (schmalen) Peaks vorliegt. Ein (schmaler) Peak hat beispielsweise eine Breite von 2° bis 4° oder von 1° bis 7,50° (allgemein im Bereich 0,1° bis 10° oder 15°). Alternativ kann die Auswerteeinheit ein Seil auch dann erkennen, wenn eine peakförmige Änderung (Maximum) der Intensitätswerte und eine peakförmige Änderung (Minimum) der Abstandswerte in demselben Winkel im vorgegebenen Messbereich detektiert werden. Bei der Verwendung eines Seils als Referenz ist entsprechend Ausführungsbeispielen zwischen zwei Modi (Erkennung in der Vogelperspektive von oben oder Erkennung in einer seitlichen Perspektive) zu unterscheiden. Entsprechend einem Ausführungsbeispiel erkennt die Auswerteeinheit ein Seil aus der Vogelperspektive, z. B. anhand oben erläutertem Muster und bestimmt einen Winkel $\alpha$ in dem vorgegebenen Winkelbereich, z. B. gegenüber einem Lot auf dem Untergrund von dem Laserscanner. Weiter kann die Auswerteeinheit ausgehend von dem gemessenen / bestimmten Winkel $\alpha$ einen Abstand a mit der Formel a = $\tan \alpha \cdot h$ (Höhe h des Laserscanners gegenüber dem Seil) berechnen. Entsprechend weiteren Ausführungsbeispielen ist die Auswerteeinheit dazu ausgebildet, ein Seil aus einer seitlichen Perspektive zu erkennen und hierbei einen Abstand durch die reine Lasermessung zu dem Seil zu bestimmen.

Entsprechend weiteren Ausführungsbeispielen ist die Auswerteeinheit additiv oder alternativ dazu ausgebildet, um eine Kante, wie z. B. eine Fräskante oder eine Bordsteinkante zu erkennen. Diese Kante kann in zwei unterschiedlichen Modi, nämlich in einer seitlichen und in einer Vogelperspektive erkannt werden. Beispielsweise erkennt die Auswerteeinheit eine Kante in einer seitlichen Perspektive, wenn die Intensitätswerte unter einem Winkelbereich des vorgegebenen Winkelbereichs eine Überhöhung ausbilden oder wenn die Abstandswerte unter einem Winkelbereich des vorgegebenen Winkelbereichs ein Plateau der Abstandswerte ausbilden. Alternativ erkennt die Auswerteeinheit eine Kombination des Plateaus der Abstandswerte und eine Erhöhung der Intensitätswerte als Kante, insbesondere dann, wenn das Plateau und die Überhöhung in einem gemeinsamen Winkelbereich des vorgegebenen Winkelbereichs auftreten. Entsprechend weiteren Ausführungsbeispielen erkennt die Auswerteeinheit eine Kante in der Vogelperspektive, wenn die Abstandswerte in einem Winkel des vorgegebenen Winkelbereichs einen Sprung ausbilden oder wenn die Abstandswerte an einem Winkel des vorgegebenen Winkelbereichs ein (kontinuierliches) Maximum ausbilden. Vorzugsweise erkennt die Auswerteeinheit dann eine Kante, wenn die Abstandswerte in einem Winkel des vorgegebenen Winkelbereichs einen Sprung ausbilden und die Abstandswerte gleichzeitig an diesem Winkel ein Maximum ausbilden. Hierbei ist es entsprechend weiteren Ausführungsbeispielen analog zu der Detektion des Seils möglich, dass ein (lateraler) Abstand a basierend auf dem (gemessenen) Winkel, unter welchem die Kante erkannt wurde, der Formel a = tan α*Höhe h bestimmt wird.

Entsprechend einem weiteren Ausführungsbeispiel ist die Auswerteeinheit dazu ausgebildet, um eine Linie, z. B. in der seitlichen Perspektive an einer Wand oder in einer Vogelperspektive auf dem Untergrund zu erkennen. Entsprechend Ausführungsbeispielen erkennt die Auswerteeinheit dann eine Linie, wenn ein Maximum der Intensitätswerte in Form eines Peaks in Kombination mit einem kontinuierlich / stetig variierenden Abstandswert oder sogar ein Minimum des kontinuierlich variierenden Abstandswert an einem Winkel erhalten werden. Bei seitlicher Abstandsbestimmung wird wiederum der per Laser ermittelte Abstandswert als Referenzwert zur Steuerung genommen, während bei einer Erkennung der Linie von oben hier wiederum die Abstandsbestimmung per Verrechnung des Winkels erfolgt.

Entsprechend Ausführungsbeispielen liest die Auswerteeinheit die Abstandswerte kontinuierlich, z. B. während der Fahrt, d. h. also über eine gewisse Zeit oder über eine zurückgelegte Strecke aus. Hierbei werden dann beispielsweise n Abstandswerte erhalten, die aufgrund dessen, dass der zurückgelegte Weg bei der typischerweise gefahrenen niedrigen Geschwindigkeit sehr klein ist, im Wesentlichen gleich sein sollten. Deshalb können dies Endabstandswerte mit folgender Formel gemittelt werden:

$$\overline{Abstand} = L = \frac{\sum_{i=0}^{n} li}{n}$$

**wobei** $l_i$ **der** Abstandswert der jeweiligen Messung ist, i die Anzahl der Messungen, n die Anzahl der aufeinanderfolgenden annähernden gleichen Messungen und L der mittlere Abstandswert zur Referenz.

Wie oben bereits erläutert, kann der Lasersensor sowohl an einem ausfahrbaren Teil der Bohle oder auch an einem Straßenfertiger selber angeordnet sein. Entsprechend einem Ausführungsbeispiel umfasst das Sensorsystem deshalb zumindest zwei Lasersensoren, einer angeordnet auf der Baumaschine / dem Straßenfertiger (zu Lenkungs- oder Nivellierungszwecken) und einer oder sogar zwei angeordnet auf den (beiden) ausfahrbaren Teilen der Bohle (zur Regelung der Bohlenbreite) oder zur Höhenregelung/Nivellierung der Einbaubohle. Die Sensoren sind bevorzugt seitlich (seitlich vorne und seitlich hinten) auf Seiten der Referenz angeordnet. Hierbei wird vorzugsweise die Vorderseite des Straßenfertigers (gegenüberliegend zu der Bohle, beispielsweise im vorderen Bereich des Fahrantriebs), und zwar möglichst weit vorne, bzw. die Hinterseite, nämlich möglichst weit hinten gewählt. Entsprechend einem weiteren Ausführungsbeispiel können natürlich auch die zwei Lasersensoren nur auf einer Seite angeordnet sein, wenn man beispielsweise davon ausgeht, dass nur eine Referenz nur auf einer Seite vorhanden ist. Entsprechend einem weiteren Ausführungsbeispiel umfasst das Sensorsystem zumindest vier Laserscanner, nämlich zwei an den ausfahrbaren Teilen zur Regelung der Bohlenbreite sowie zwei an dem Straßenfertiger zur Lenkung des Straßenfertigers selbst (zum Beispiel im vorderen Bereich des Fahrantriebs) oder aber auch zur Höhenregelung/Nivellierung der Einbaubohle, wenn man beispielsweise von zwei seitlichen Referenzen ausgeht.

Entsprechend Ausführungsbeispielen umfasst das Sensorsystem eine Steuerung, die ausgelegt ist, die ausfahrbaren Teile der Bohle oder die Bohle zu steuern. Diese Steuerung kann unter Berücksichtigung eines Maschinenfixpunkts erfolgen, wenn man davon ausgeht, dass der oder die Laserscanner zwar auf dem ausfahrbaren Teil bzw. auf der Bohle angeordnet sind, aber mit einem gewissen Offset zu den zu steuernden Flächen. Entsprechend weiteren Ausführungsbeispielen umfasst das Sensorsystem eine Steuerung zur Steuerung der Lenkung des Straßenfertigers. Hierbei kann die Steuergliederung unter Berücksichtigung eines Maschinenfixpunkts, z. B. zu dem Drehpunkt des Straßenfertigers erfolgen.

Ein weiteres Ausführungsbeispiel bezieht sich darauf, dass der Laserscanner neben der Auswertung einer Kante oder der Bestimmung des Abstands zu einem Referenzdraht auch eine Höheninformation für die Nivellierung einer Einbaubohle eines Straßenfertigers generieren kann, wenn die Nivellierung der Einbaubohle über einen Referenzdraht durchgeführt wird. Dabei erfolgt eine Abtastung vorzugsweise seitlich vom Referenzdraht. Vorzugsweise wird der Sensor am Zugarm in der Nähe vom Zugpunkt, d. h. in Fahrtrichtung des Straßenfertigers gesehen im vorderen Bereich des Zugarms, angebracht und bietet an dieser Position Möglichkeiten für eine optimierte Nivellierung der Einbaubohle eines Straßenfertigers.

Entsprechend Ausführungsbeispielen ist die Steuerung dazu ausgelegt, die Einbaubohle in ihrer Höhenlage zu regeln bzw. zu nivellieren.

Ein weiteres Ausführungsbeispiel bezieht sich auf ein Verfahren zur Ermittlung eines Abstands zu einer Referenz und/oder eines Winkels gegenüber der Referenz unter Verwendung von zumindest einem ersten Laserscanner, wie er oben erläutert wurde. Das Verfahren umfasst die Schritte:

- Erkennen eines Objekts als Referenz zusammen mit dem zugehörigen Winkel ausgehend von einem bekannten Muster, umfasst die Abstände und die Intensitätswerte über die Winkel des vorgegebenen Winkelbereichs;

- Bestimmen eines Abstands zu der Referenz und/oder eines Winkels gegenüber der Referenz (aus welchem dann im Endeffekt der Abstand bestimmbar ist).

Dieses Verfahren kann entsprechend weiteren Ausführungsbeispielen auch computerimplementiert sein.

Ein weiteres Ausführungsbeispiel schafft einen Straßenfertiger und ein entsprechendes Sensorsystem. Weiterbildungen sind in den Unteransprüchen definiert. Ausführungsbeispiele der vorliegenden Erfindung werden anhand der beiliegenden Zeichnungen erläutert.

Es zeigen:

Fig. 1a      eine schematische Darstellung eines Sensorsystems gemäß einem Basisausführungsbeispiel;

Fig. 1b      eine schematische Darstellung von möglichen Anbringungsorten der Sensoren des Sensorsystems an einem Straßenfertiger gemäß weiteren Ausführungsbeispielen;

Fig. 1c bis 1d      schematische Darstellungen zur Illustration der mittels des Sensorsystems zu messenden Messgrößen im Verhältnis zu den Regelungsgrößen;

Fig. 2a bis 2d      schematische Darstellungen eines Straßenfertigers mit unterschiedlich angeordneten Laserscannern zur Erläuterung der unterschiedlich anzupeilenden Referenzen gemäß Ausführungsbeispielen;

Fig. 3a bis 3e      schematische Darstellung zur Erläuterung der Mustererkennung "Seil" gemäß Ausführungsbeispielen;

Fig. 4a bis 4f      schematische Darstellungen zur Erläuterung der Mustererkennung "Fräskante" gemäß Ausführungsbeispielen;

Fig. 5a bis 5b      schematische Darstellungen zur Erläuterung der Mustererkennung "Linie" gemäß Ausführungsbeispielen;

Fig. 6a bis 6b      schematische Darstellungen von Funktionsblöcken einer Auswerteeinheit gemäß Ausführungsbeispielen;

Fig. 6c      eine schematische Darstellung eines Scanbereichs eines Laserscanners;

Fig. 7a      eine schematische Darstellung des Laserscanners zur Verwendung als Höhensensor gemäß Ausführungsbeispielen;

Fig. 7b      eine schematische Darstellung zur Erläuterung der Umrechnung einer Winkelinformation in eine Höheninformation gemäß Ausführungsbeispielen; und

Fig. 7c      eine schematische Darstellung zur Erläuterung einer Messung der Anzahl der Laserpulse, bis ein Referenzdraht getroffen wird.

Bevor nachfolgend Ausführungsbeispiele der vorliegenden Erfindung anhand der beiliegenden Zeichnungen erläutert werden, sei darauf hingewiesen, dass geeignete Elemente und Strukturen mit den gleichen Bezugszeichen versehen sind, so dass die Beschreibung aufeinander anwendbar bzw. austauschbar ist.

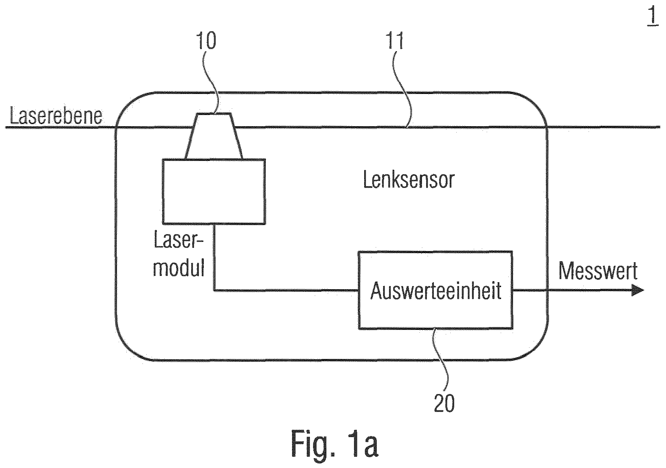

Fig. 1a zeigt eine schematische Darstellung eines Sensorsystems 1 mit einem Lasermodul als erster Laserscanner 10 und einer Auswerteeinheit 20, die z. B. über ein Kabel mit dem Laserscanner 10 verbunden ist.

Der Laserscanner 10 dient als Sensorelement und scannt, z. B. in einer Laserebene 11, den Messbereich nach Objekten, wie z. B. einem Seil oder einem Bordstein oder einem anderen Element, das als Referenz dienen kann, ab. Die Laserebene 11 bildet einen durch einen Laserstrahl aufgespannten Fächer von möglichen Abtastwinkeln (60-Grad-Fächer, 135-Grad-Fächer oder 180-Grad-Fächer bzw. Fächer mit einem beliebigen Winkeln / Winkelbereich), der den unbeschränkten Messbereich bildet. Der Fächer ist beispielsweise senkrecht zur Fahrtrichtung aufgespannt, wobei senkrecht meinen kann, dass ein Nullwinkel senkrecht nach unten ragt und weitere Winkel nach links und rechts mit +/- x°, z.B. +/-90° abgetastet werden können (in diesem Bereich ist eine Abtastung möglich, so dass als Bereich, umfassend Abtastwinkel bezeichnet werden kann). Hierzu wird beispielsweise ein rotierender Laserstrahl (Rotlicht oder Licht im IR-Bereich) entlang des Fächers ausgesendet und mittels eines in den Scanner integrierten Empfängers die Reflexionscharakteristik empfangen. Derartige Scanner haben beispielsweise eine Scanrate von 50Hz, um die Zeit und Winkelauflösung zu gewährleisten. Die Reichweite solcher Scanner ist im Bereich von wenigen Millimetern (1mm) bis 100m zu sehen. Die Verwendung eines Lasers 10 als Sensor bietet den Vorteil, dass dieser kontaktlos arbeitet und nicht nur Objekte erkennen kann, sondern auch gleichzeitig den Abstand zwischen Objekt und Laserscanner und/oder den Winkel des Objekts zu einer Referenzlage (z.B. einer Waagrechten oder Senkrechten, die je nach Ausrichtung des Laserscanners unterschiedlich sein kann und ggf. auch um ein Offset, resultierend aus einer verwinkelten Ausrichtung / Fehlausrichtung des Laserscanners, bereinigt wird) hochgenau bestimmt. Des Weiteren ermöglicht dieser Sensor auch das kontinuierliche Verfolgen der Referenz. Verfolgen meint, dass über die Zeit der Abstand zu selbiger und/oder der Winkel gegenüber selbiger ausgehend von einer bekannten (Position/Ausrichtung des Scanners) bestimmt / getrackt wird. Das Erkennen, Verfolgen und Auswerten der Referenz wird durch die Auswerteeinheit 20 durchgeführt.

Die Auswerteeinheit 20 kann beispielsweise durch eine CPU realisiert sein und ist ausgebildet, um ausgehend von den durch das Lasermodul 10 gelieferten Messwerten, diese derart zu prozessieren, dass am Ende der Berechnungskette der hochgenaue Abstand zur Lenk- bzw. Höhenreferenz als Messergebnis vorliegt. Das Ergebnis wird dann beispielsweise einem übergeordneten Lenkungssteuerungssystem und/oder einer Höhennivellierungsregelung zur Verfügung gestellt.

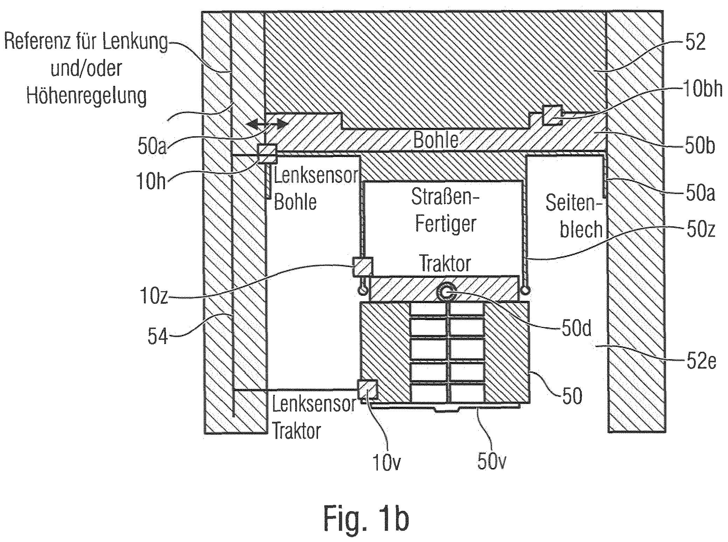

Der hier dargestellte Lenksensor 1 bzw. das Sensorsystem 1 ist universell verwendbar, nämlich sowohl für die Traktorlenkung (Lenkung des Fahrantriebs) als auch für die Bohlensteuerung (seitliche Lage und/oder Höhe). Wie Bezug nehmend auf Fig. 1b gezeigt ist, kann der universell verwendbare Lenksensor 1 (Sensorsystem 1) bzw. das Lasermodul 10 an mehreren unterschiedlichen seitlichen Positionen des Straßenfertigers angeordnet sein, je nachdem, ob das Sensorsystem 1 als Lenk- und/oder als Höhensensor verwendet wird.

Fig. 1b zeigt einen Straßenfertiger 50 mit einer Bohle 50b, die seitlich durch die ausfahrbaren Bohlenausleger 50a begrenzt ist. Je nach Ausfahrzustand der ausfahrbaren Teile 50a ändert sich die Breite der Bohle 50b und damit auch die Breite der einzubauenden Asphaltschicht 52. Um den Straßenfertiger 50, z. B. in dem Einbaubereich 52e zu steuern bzw. die Bohlenbreite anzupassen und/oder aber auch eine Höhennivellierung der Bohle 50b vorzunehmen, wird Bezug zu einer Referenz 54, z. B. einem neben dem Einbaubereich 52e gespannten Seil genommen. Diese Referenz kann unter Verwendung der in Fig. 1a erläuterten Lasersensoren erfasst werden.

Entsprechend einer ersten Variante wäre eine Einbauposition auf dem Straßenfertiger 50, z. B. an der Vorderseite 50v denkbar. Rein exemplarisch ist ein Lenksensor 10v dargestellt. Dieser ist hier mit einem maximalen Abstand zu dem Drehpunkt 50d des Straßenfertigers vorgesehen. Mittels diesem Anbringungsort 10v kann die Lenkung beim Straßenfertiger unterstützt bzw. automatisiert werden, wie nachfolgend erläutert wird. Die Lenkung des Straßenfertigers 50 verfolgt im Allgemeinen das Ziel, die Vorwärtsbewegung der Maschine 50 beim Asphalteinbau parallel entlang der Referenz 54 zu steuern. Dabei übernimmt der Traktor vom Straßenfertiger 50 zunächst die eigentliche Lenkung der Maschine 50. Hierfür stehen entsprechende Lenksysteme zur Verfügung, die man in der Regel manuell bedient.

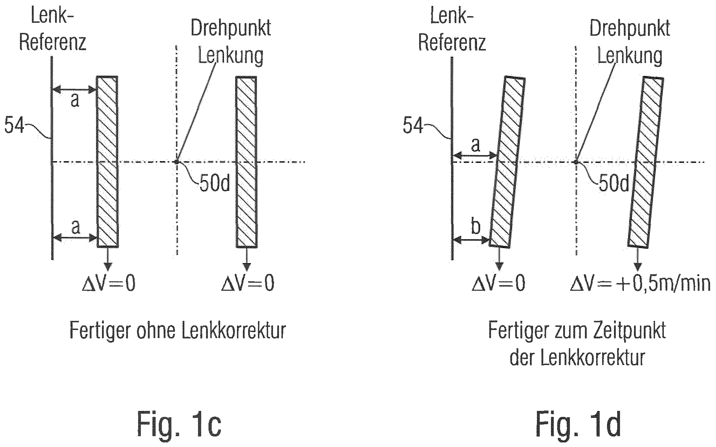

Ändert sich der Abstand zwischen dem Sensor 10v und der Referenz 54 kann dies infolge einer Lenkkorrektur (Drehung um den Lenkungsdrehpunkt 50d) erfolgen, sodass sich der Richtungsvektor der Maschine ändert. Diese Änderung ist mittels des Sensors 10v erfassbar. Wenn man den Fertiger zum Zeitpunkt der Lenkkorrektur (vgl. Fig. 1d) betrachtet, erkennt man, dass sich auf der Höhe des Drehpunkts 50d der Abstand a im Vergleich zu dem Zeitpunkt vor der Lenkkorrektur (vgl. Fig. 1c) kaum geändert hat, während sich der Abstand b wesentlich stärker ändert. Infolgedessen ergibt sich durch diese Maßnahme zum Zeitpunkt der Lenkkorrektur eine entsprechende Signaländerung für den Lenksensor 10v bzw. auch alle weit vorne oder weit hinten angeordneten Lenksensoren. Deshalb sind in vorteilhafter, aber nicht zwingender Weise die Anbringungsorte der Lenksensoren 10v für den Traktor bzw. im Allgemeinen (das heißt auch für das weitere Ausführungsbeispiel "Anbringungsort Bohle") so zu wählen, dass sie möglichst weit vom Lenkungsdrehpunkt 50d entfernt sind.

Entsprechend einem weiteren Ausführungsbeispiel kann der Lenksensor auch auf der Bohle 50b oder insbesondere auf dem ausfahrbaren Teil der Bohle 50a angeordnet sein. Dies ermöglicht insbesondere, die Seitenbleche der ausfahrbaren Teile 50a gegenüber der Referenz 54 zu führen. Exemplarisch ist hier der Anbringungsort 10h für den Lenksensor auf dem ausfahrbaren Teil 50a dargestellt. Während der Lenksensor 10v zur Automatisierung der Lenkung des Traktors 50d dient, kann mittels des Lenksensors 10h der Lenkregelkreis für die Bohle automatisiert werden. Über die Bohle 50b bzw. die ausfahrbaren Teile 50a der Bohle 50b können kleinere Lenkungenauigkeiten korrigiert werden. Entsprechend bevorzugten Ausführungsbeispielen formen die hinten angebrachten Lenksensoren 10h zusammen mit der Bohle einen Regelkreis, während die vorne angebrachten Sensoren 10v einen Lenkregelkreis für den Traktor schaffen. Insofern gibt es zu jedem Sensor 10v und 10h einen eigenen Regelkreis, der den Abstand zu der vorgegebenen Referenz 54 konstant hält. Insbesondere sollten kleinere Lenkungenauigkeiten sowie sonstige Störgrößen, die nicht zu dem gewünschten Einbau führen, vom Bedienpersonal am Aussteuerstand oder automatisiert über den ausfahrbaren Teil 50a der Bohle 50b korrigiert werden.

Die Anbringung der Lenksensoren am Traktorteil und an der Bohle sowie die in der Praxis parallel unterschiedlichen Referenztypen erfordert verschiedene Auswertemechanismen, die neben der Identifizierung der Referenz auch den Abstand zur Referenz bestimmen. Dies wird nachfolgend im Detail erläutert.

Entsprechend einer optionalen / alternativen Variante kann der Sensor 10z auch im Bereich des Zugarms angebracht sein. Ferner ist mit dem Bezugszeichen 10bh ein weiterer möglicher Anbringungsort für den Sensor an der Bohlenhinterkante markiert. Dieser Anbringungsort stellt für die Höhensteuerung eine präferierte Variante dar.

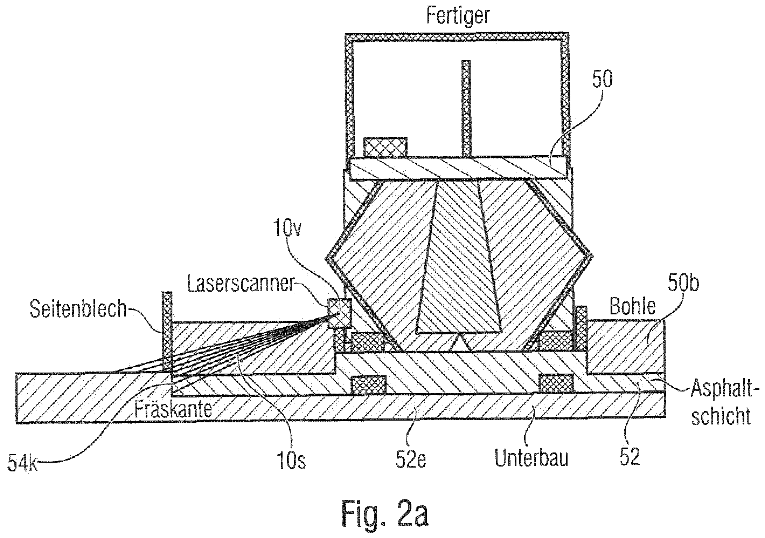

In Fig. 2a ist der Fall "Lenksensor" für den Traktorteil vom Fertiger zur Abtastung einer Fräskante illustriert:

Der Lenksensor 10v vom Traktor 50 soll, wie Bezug nehmend auf Fig. 1c und 1d erläutert ist, möglichst weit im Vorhalt angebracht sein, damit durch eine Lenkkorrektur vom Fertiger, die Abstandsänderung zur Referenz 54k (hier eine Fräskante) signifikant ändert. Hierdurch wird eine wesentlich bessere Feinjustierung der Lenkung erreicht. An dieser Stelle sei angemerkt, dass diese Positionierung bevorzugt, aber nicht zwingend ist. Ebenso ist die Positionierung des Sensors 10v an der Seite bevorzugt, wie hier in der Vorderansicht von Fig. 2a dargestellt ist. Hintergrund zur seitlichen Anordnung besteht darin, dass die Referenz, hier die Fräskante 54k im relevanten Scanbereich 10s von dem Laserscanner 10v angeordnet ist. Wie hier dargestellt, scannt der Laserscanner 10v einen beispielsweise im 30-Grad-Winkel aufgespannten Messbereich den Untergrund 52e, auf welchem die Asphaltschicht 52 aufgebracht werden soll, nach der Fräskante 54k ab. Hierbei ist dieser relevante Messbereich 10s bereits gegenüber der Horizontalen geneigt, z. B. um 15 Grad. Somit ergibt sich also ein exemplarischer Scanbereich von 15 bis 45 Grad bezogen auf die Horizontale. An dieser Stelle sei angemerkt, dass je nach Anbringungshöhe des Lenksensors 10v (gegenüber dem Untergrund 52e) und (lateraler) Abstand der Fräskante 54k dieser Messbereich variieren kann.

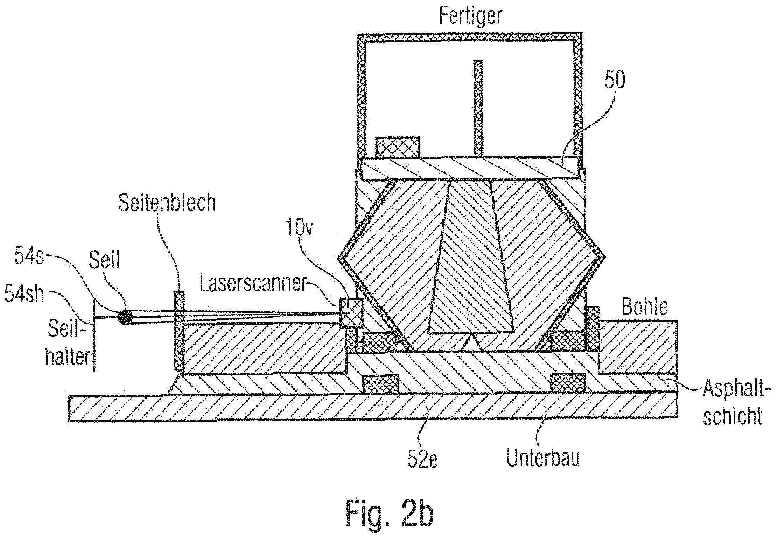

Fig. 2b illustriert einen weiteren Fall, nämlich die Anordnung des Lenksensors 10v zur Abtastung eines Referenzseils 54s, der wiederum an dem in der Vorderansicht dargestellten Fertiger 50 seitlich angeordnet ist. In diesem Ausführungsbeispiel ist das Seil 54s mittels eines Seilhalters 54sh in etwa der gleichen Höhe gegenüber dem Untergrund 52e angeordnet, wie der Laserscanner 10v. In diesem Ausführungsbeispiel tastet der Laserscanner 10v nicht den Untergrund 52e, sondern den seitlichen Bereich nach dem Seil 54s ab. Ausgehend von einer identischen Position des Sensors 10v gegenüber der Variante aus Fig. 2a erfolgt bei dieser nichtangewinkelten Variante eine Bestimmung des Abstands zwischen Laserscanner 10v und Seil 54s direkt mittels des Lasers, der bei der Variante aus Fig. 2a entweder der Abstand zwischen der Fräskante 54k und dem Laserscanner 10v unter Berücksichtigung des Winkels oder der Höhe oder auch dem Winkel, unter welchem die Fräskante 54k erhalten ist unter Berücksichtigung der Höhe als entsprechendes Referenzmaß genommen wird.

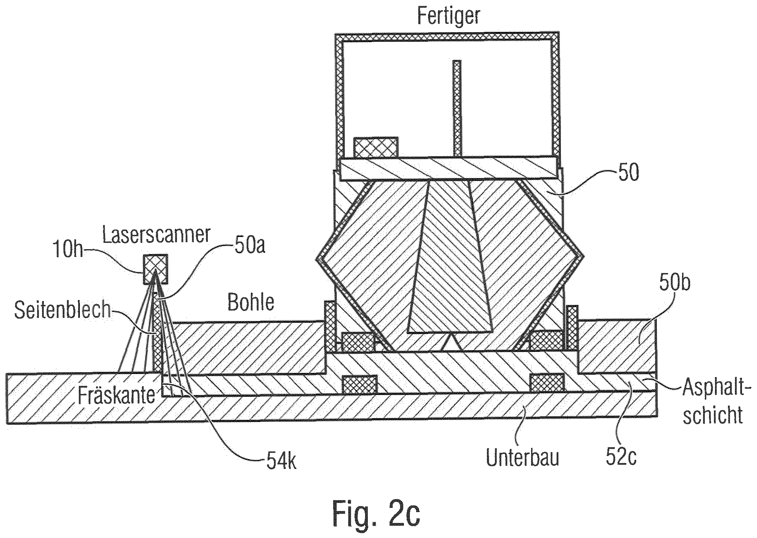

Fig. 2c zeigt die Verwendung des Laserscanners 10h an der Bohle zur Abtastung einer Fräskante 54k. Hier befindet sich also ein Laserscanner 10h am hinteren Teil des Fertigers 50. Dadurch, dass die Bohle 50b bzw. insbesondere die ausfahrbaren Teile der Bohle 50a prozessbedingt immer im Außenbereich der aufzubringenden Asphaltschicht 52a positioniert sind, kann der Laserscanner 50h senkrecht nach unten ausgerichtet werden, so dass dieser in der Vogelperspektive die Fräskante 54k erfasst. Hierzu ist der Laserscanner 50h beispielsweise am Seitenblech des ausfahrbaren Teils 50a derart angeordnet, dass der Sensor die Fräskante von oben erfassen kann, und vorzugsweise so, dass er die Fräskante 54k unter dem Winkel 0 Grad, d. h. also senkrecht unterhalb des Laserscanners 54h detektiert, wenn das Seitenblech des ausfahrbaren Teils 50h korrekt positioniert ist. Die Abweichung von dieser korrekten Position, d. h. also der Winkel, unter welchem die Fräskante 54k erfasst wird, kann als Messwert dem Regelkreis für die ausfahrbaren Teile 50a der Bohle 50b zur Verfügung gestellt werden.

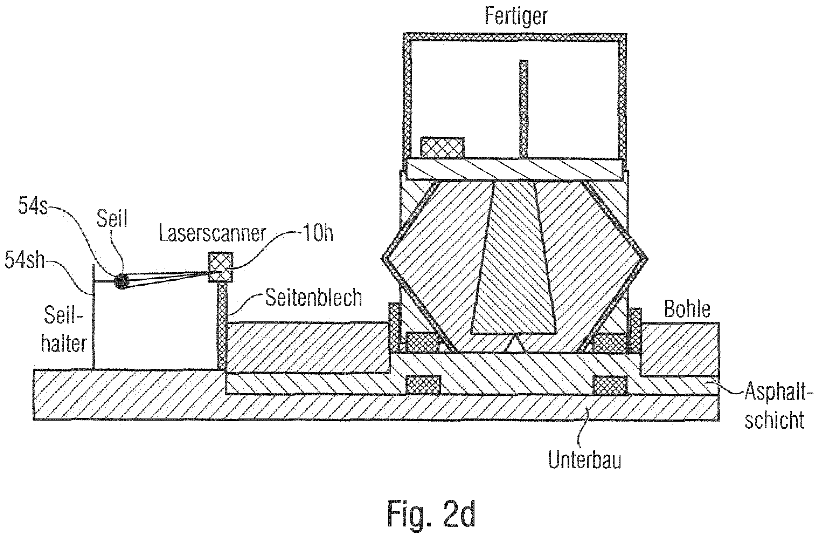

In Fig. 2d ist ein an der Bohle angeordneter Laserscanner 10h zur Abtastung eines Referenzseils 54s gezeigt. Das Referenzseil 54s wird wiederum über den Halter 54sh, vorzugsweise auf Höhe des Laserscanners 10h gehalten. Diese Verwendung eines Seils 54s als Referenz kann alternativ oder zusätzlich zur der Fräskantenauswertung erfolgen. Hier wird, wie bereits im Zusammenhang mit Fig. 2b erläutert, der Abstand zur Referenz gemessen, wobei der Messwert an dem Regelkreis für den ausfahrbaren Teil der Bohle zur Verfügung gestellt wird.

Ausgehend von diesen Positionen wird ersichtlich, dass entsprechend bevorzugten Ausführungsbeispielen ein Sensorsystem für den Regelkreis der ausfahrbaren Teile der Bohle zumindest einen Laserscanner (auf Seiten des Laserscanners zur Lenkungsregelung) oder vorzugsweise zwei Laserscanner (links, rechts) aufweist, während ein Sensorsystem zur Lenkung des Straßenfertigers ein oder zwei Laserscanner aufweist. Entsprechend einer Implementierung umfasst das Sensorsystem eine Auswerteeinheit und vier Laserscanner. Alternativ kann jeder Laserscanner auch direkt mit einer Auswerteeinheit gekoppelt sein. Diese ist entsprechend Ausführungsbeispielen in dem Sensor direkt integriert.

Entsprechend einer bevorzugten Implementierung umfasst das Sensorsystem insgesamt vier Laserscanner 10v und 10h, die an den oben erläuterten Positionen ausfahrbaren Teile 50a und Fertiger 50 selbst jeweils links und rechts angeordnet sind.

Der Laserscanner 10 bzw. das Sensorsystem 1 kann alternativ oder zusätzlich am Zugarm 50z bzw. in der Nähe vom Zugpunkt und/oder an der Bohle 50b angeordnet sein, beispielsweise an einem Seitenblech/-Seitenschild der Bohle 50b oder an einem ausfahrbaren Teil der Bohle 50a des Straßenfertigers, und als Höhensensor eingesetzt oder verwendet werden, um alternativ oder zusätzlich zur Lenkinformation eine Höheninformation zu liefern. In vorteilhafter Weise kann mit dem Sensorsystem somit auch eine Höhenregelung bzw. Nivellierung der Bohle 50b erfolgen. Bringt man den Laserscanner 10 in der Nähe vom Zugpunkt an, so eignet sich dieser beispielsweise auch zur Höhenabtastung an einem Referenzseil 54s. Dabei kann die Sensorposition vom Laserscanner 10 bei der Verwendung als Höhensensor im Gegensatz zur Verwendung als Lenksensor unter Umständen eine abweichende (Montage-)Position besitzen.

Dabei erfolgt eine Abtastung vorzugsweise seitlich vom Referenzdraht/Referenzseil 54s. Vorzugsweise wird der Laserscanner 10 am Zugarm 50z in der Nähe vom Zugpunkt, d. h. in Fahrtrichtung des Straßenfertigers gesehen im vorderen Bereich des Zugarms 50z, angebracht und bietet an dieser Position Möglichkeiten für eine optimierte Nivellierung der Einbaubohle 50b des Straßenfertigers 50.

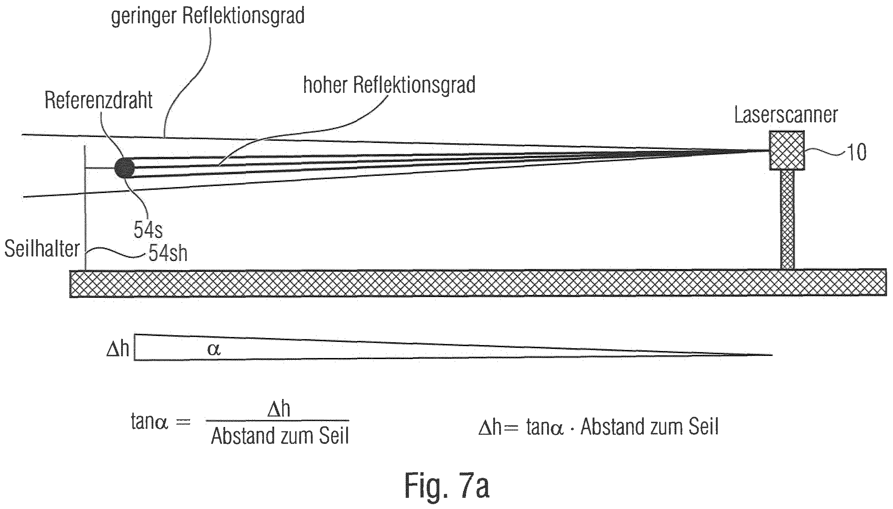

Der Laserscanner 10 ermöglicht eine Höhenabtastung aufgrund der Winkelinformation, die bei jedem Abtastwert mitgeliefert wird. Dabei ist entscheidend, dass der Laserscanner 10 eine möglichst hohe Winkelauflösung besitzt. Im Beispiel gemäß Fig. 7a wird von einer Winkelauflösung von ungefähr 0,01° ausgegangen. Der Abstand zum Referenzdraht/Referenzseil 54s liegt in der Regel zwischen einem und vier Meter.

Dabei verändert sich eine Höhenauflösung mit dem Abstand zum Referenzdraht/Referenzseil 54s, d. h. steigt mit zunehmendem Abstand zum Referenzdraht/Referenzseil 54s hin an. Wie in Fig. 7a dargestellt, so berechnet sich die Höhenauflösung Δh anhand der Formel Δh = tan Winkel (Winkelauflösung Laserscanner) · Abstand. Zur Berechnung Δh wird also z.B. der (gemessenen) Winkel in Kombination mit dem (gemessenen) Abstand zur Referenz 54s verwendet. Bei einer wie oben angegebenen Winkelauflösung des Laserscanners 10 von ungefähr 0,01° und einem Abstand von 4 m ergibt sich eine Höhenauflösung Δh von 0,70 mm. Im Vergleich dazu beträgt die Höhenauflösung Δh bei einem Abstand von 1 m ca. 0,17 mm. Solche Höhenauflösungswerte sind durchaus ausreichend für eine Nivellierung der Einbaubohle eines Straßenfertigers. Neben einer Veränderung der Höhenauflösung bei unterschiedlichen Abständen zum Referenzdraht/Referenzseil 54s, so verändert sich auch die Anzahl der Treffer vom Referenzdraht/Referenzseil 54s durch den Laserstrahl, der mit jeder Messung einen Laserimpuls aussendet und über die Laufzeit des Impulses den Abstand bestimmt. Diese Veränderung der Trefferanzahl muss für eine Höhenberechnung berücksichtigt werden und wird weiter unten näher betrachtet.

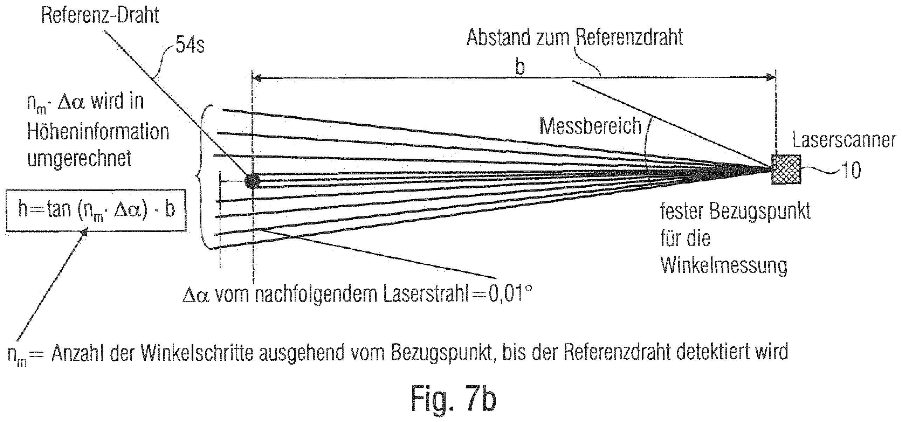

Eine Messung der Höhe durch den Laserscanner 10, welcher vorzugsweise am Zugarm 50z in der Nähe vom Zugpunkt, d. h. in Fahrtrichtung des Straßenfertigers 50 gesehen im vorderen Bereich des Zugarms 50z, angeordnet ist, relativ zum Referenzdraht/Referenzseil 54s wird also nicht nur über eine Abstandsmessung bestimmt, sondern auch über eine Winkelmessung, die jedem Laserimpuls zugeordnet ist. Um eine Höheninformation zu erhalten bzw. um eine Höhe zu bestimmen, welche in Bezug zum Referenzdraht/Referenzseil 54s steht und somit auch die relative Höhe vom Straßenfertiger-Zugarm 50z zum Referenzdraht/Referenzseil 54s repräsentiert, besitzt die Winkelmessung vom Laserscanner 10 einen festgelegten Bezugspunkt, dessen Position sich nicht ändert. D. h. die Winkelinformation bezieht sich immer auf diesen festen Punkt im Laserscanner 10. Ausgehend von diesem festen Bezugspunkt werden dann von dem Messsystem $n_m$ - Winkelschritte gezählt, bis der Referenzdraht bzw. das Referenzseil 54s getroffen wird. Mithilfe der gezählten Winkelschritte $n_m$ (alternativ mithilfe des gemessenen Winkels), dem Abstand b zum Seil 54s sowie dem Winkel Δα, der den Winkel zwischen zwei aufeinanderfolgenden Abstandsmessungen repräsentiert, kann die relative Höhe (h) bestimmt werden, und zwar mit der Formel h = tan ($n_m$ · Δα) · b. Fig. 7b soll dies näher verdeutlichen. Die so ermittelte relative Höhe (h) wiederum kann mit einem Offset derart versehen werden, dass in einem abgeglichen Zustand vom System "Fertiger - Referenzdraht" der Höhenwert 0 mm vom Messsystem ausgegeben wird.

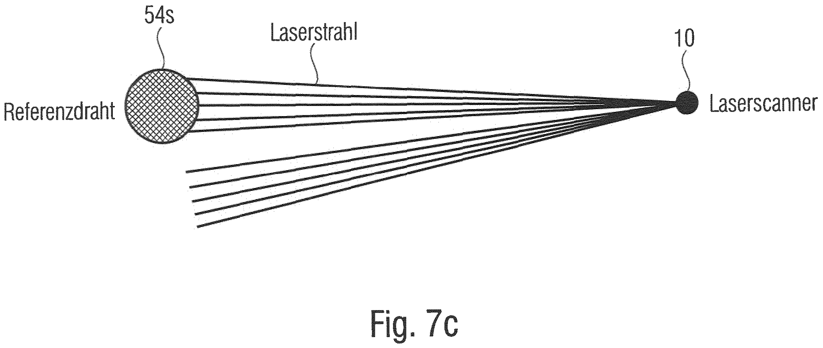

Wird der Referenzdraht mehrfach vom Laserstrahl getroffen, so muss $n_m$ so ausgewertet werden, dass der Wert von $n_m$ das Zentrum vom Seil 54s wiederspiegelt. Fig. 7c soll dies verdeutlichen. Die Anzahl der Laserpulse, bis der Referenzdraht 54s getroffen wird, berechnet sich wie folgt:

$$n_m = n_i + \frac{n_r}{2}$$

mit:

> $n_l$ = Anzahl der Lasermessungen, bei denen die Referenz nicht getroffen wurde; und
> $n_r$ = Anzahl der Lasermessungen, bei denen die Referenz vollständig von Laserstrahlen getroffenen wurde.

Alternativ zur dargestellten Berechnung der Höhe in Millimetern kann man auch für die Angabe der Höheninformation den Zählwert der Laserimpulse $n_m$ verwenden. Der Unterschied zur Höheninformation in mm ist lediglich der, dass $n_m$ dimensionslos ist und den Abstand zwischen Laserscanner und Referenzdraht nicht berücksichtigt.

Entsprechend einem bevorzugten Ausführungsbeispiel ist jeder Laserscanner geeignet, um z. B. ausgehend von einer Benutzereingabe nach einer bestimmten Referenz, z. B. der Fräskante 54k oder dem Referenzseil 54s zu suchen und dieses zur Abstandsmessung zu erfassen bzw. den Abstand kontinuierlich zu ermitteln. Die Auswahl erfolgt über die Benutzereingabe oder automatisiert je nach Verfügbarkeit.

Entsprechend einem weiteren Ausführungsbeispiel kann auch ein anderes Objekt, wie z. B. eine auf eine Wand aufgetragene Linie als Referenz dienen. Bevor nachfolgend im Detail auf die Abstandsmessung eingegangen wird, wird vorab der Laserscanner bzw. eine exemplarische Version des Laserscanners erläutert.

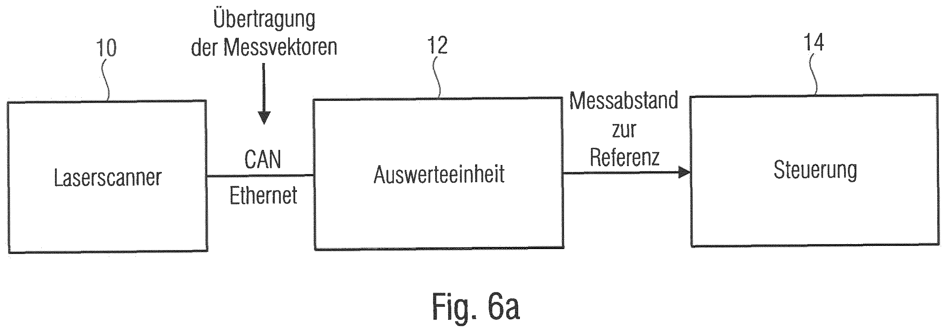

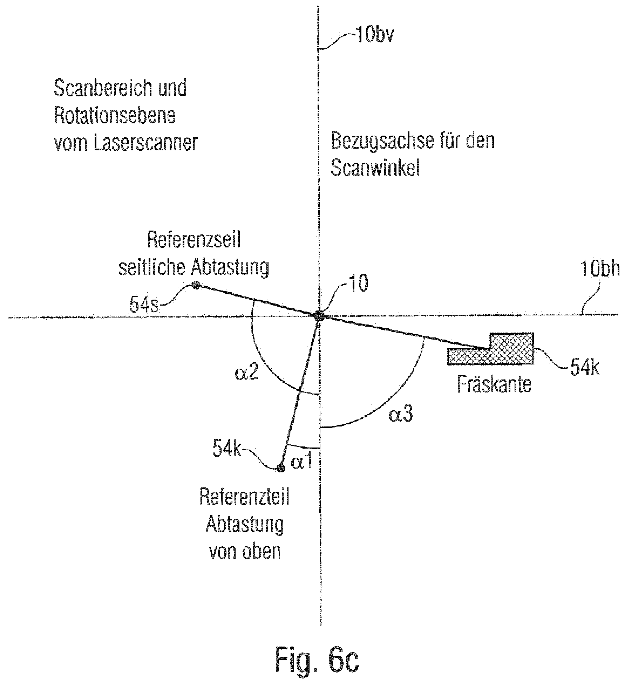

Der Laserscanner 10, wie er beispielsweise in Fig. 1 oder Fig. 6a dargestellt ist, kann beispielsweise als rotierender Laserscanner ausgeführt sein, der eine kontinuierliche Abstandsmessung durchführt, so dass man in der Rotationsebene von dem Laser alle Konturen mit Hilfe der gemessenen Abstandsvektoren messtechnisch erfassen kann. Der Messvektor vom Laserscanner besitzt neben dem Abstandswert noch Informationen über die Signalstärke (Reflexionsgrad der Messung) und den Messwinkel, der sich auf einen internen Referenzpunkt bezieht). Hierzu sei auf den in Fig. 6c dargestellten Scanbereich verwiesen. Wie zu erkennen ist, weist der Scanbereich zwei Bezugsachsen, nämlich eine horizontale Bezugsachse 10bh und eine vertikale Bezugsachse 10bv auf. Im Ausführungsbeispiel sind alle Messwinkel $\alpha1$, $\alpha2$ und $\alpha3$ auf die X-Achse 10bv, d. h. also auf das senkrechte Lot bezogen. Bei fester Montage von Laserscanner am Fertiger besitzt der Referenzpunkt auch einen festen Bezug zum Fertiger selbst, z. B. einen Abstand zu dem Bewegungsvektor durch den Drehpunkt. Insgesamt ergibt sich somit ein Messvektor, der aus drei Informationskomponenten pro Messvorgang besteht:

- Abstandswert zu dem erfassten Objekt
- Signalstärke (Reflexionsgrad) und
- Messwinkel (zu einer Bezugsachse 10bv oder 10bh)

Je nachdem, in welcher Höhe der Sensor 10 angeordnet ist, ergibt sich ein Messwinkel $\alpha1$, $\alpha2$ und $\alpha3$ zu der jeweiligen Referenz. Hierbei ist der Referenzwinkel $\alpha1$ zur Abtastung, z. B. einer Fräskante 54k von oben, $\alpha2$ zur Abtastung einer seitlichen Referenz 54s von der Seite und $\alpha3$ zur Abtastung einer zeitlichen Fräskante 54k eingetragen. Die Messwinkel $\alpha1$, $\alpha2$ und $\alpha3$ stellen die Relation zur Bezugsachse 10bv der Laserebene dar.

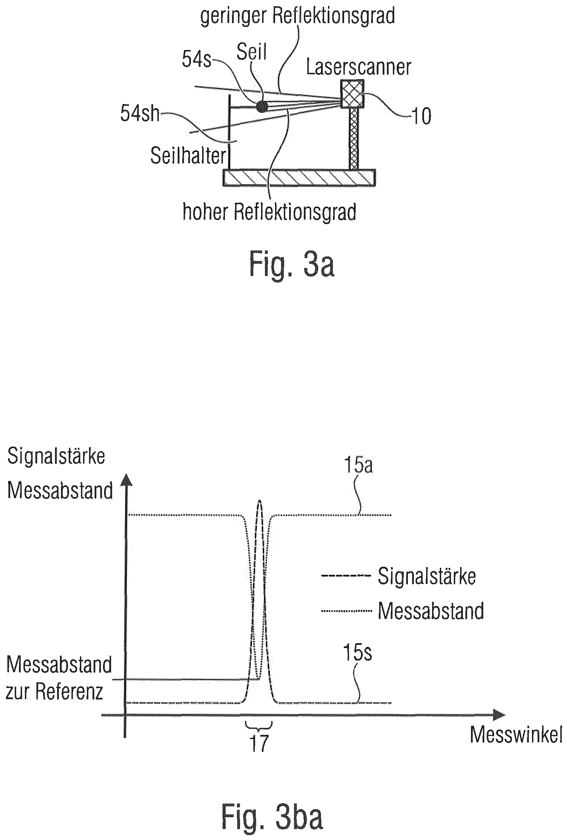

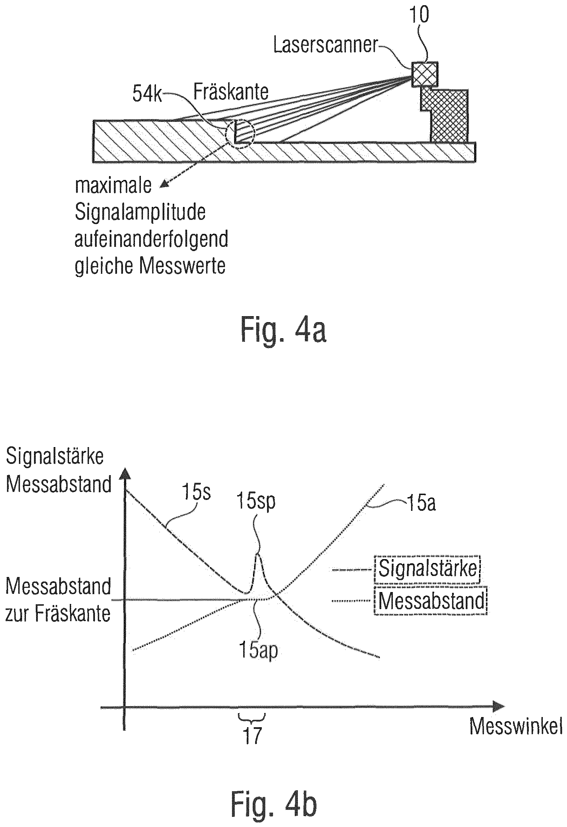

Nachfolgend wird Bezug nehmend auf Fig. 3a bis 3e sowie 4a bis 4f die Mustererkennung der jeweiligen Referenz erläutert. Für die Lenkreferenz bzw. allgemein für die Referenz ergeben sich in der Praxis unter anderem folgende Möglichkeiten:

- Fräskante
- Gespanntes Referenzseil
- Referenzlinien
- Bordsteinkante

Jede Lenkungsreferenz bzw. allgemein Referenz besitzt eine bestimmte Referenzkontur, die wiederum beim abscannen bestimmte Signalverläufe produzieren, woraus sich die Identifizierung der Referenz ableiten lässt. Die Signalverläufe müssen in einem Auswertealgorithmus so analysiert werden, dass neben der Referenzerkennung auch der exakte Abstand zur Referenz bestimmt wird.

In Fig. 3a ist die Mustererkennung eines Seils 54s mittels des Laserscanners 10 dargestellt. Der Laserscanner 10 liefert hier nur wenige Messungen (3 bis 5 Messungen - abhängig von dem Abstand und Seildurchmesser) mit einer hohen Signalamplitude und somit mit einem hohen Reflexionsgrad. Alle weiteren Messwerte sind entweder weiter entfernt und/oder besitzen eine geringe Signalamplitude.

Für die in Fig. 3a dargestellte Abtastsituation ergibt sich prinzipiell der in Fig. 3ba dargestellte Signalverlauf für Abstandsmesswerte 15a und Signalstärke 15s. Diese zwei Messwerte 15a und 15s sind über den Messwinkel aufgetragen. Wie zu erkennen ist, bilden sich in dem Scanbereich 17, z. B. im Bereich zwischen 88 und 92 Grad jeweils peakförmige Signalverläufe der Messwerte 15a und 15s aus. Diese Charakteristika von einer unter demselben Winkel auftretenden Änderung (Minimum) des Messabstands 15a mit einer Änderung (Maximum) der Signalstärke 15s an einem Winkel ermöglichen die Erkennung eines Seils. Ausgehend von dem Messwert 15a an seinem Minimum kann der Abstand zur Referenz bestimmt werden. Insofern hat für die Situation seitliche Seilerkennung der Auswertealgorithmus die Aufgabe bei maximaler Signalstärke den Minimalabstand zur Referenz zu ermitteln, der dann auch den Messabstand zur Referenz widerspiegelt.

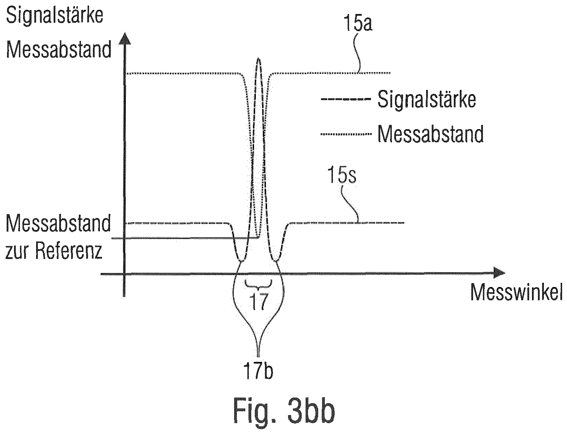

Fig. 3bb illustriert einen alternativen Signalverlauf für Abstandsmesswerte 15a und Signalstärke 15s. Hier ist der Scanbereich 17 durch Minima 17b begrenzt, zwischen welchen das eine Maxima der Signalstärke 15s sich ausbildet. Bei der Erkennung des Seils können neben dem Signalstärkemaximum die Minima 17b mit verwendet werden.

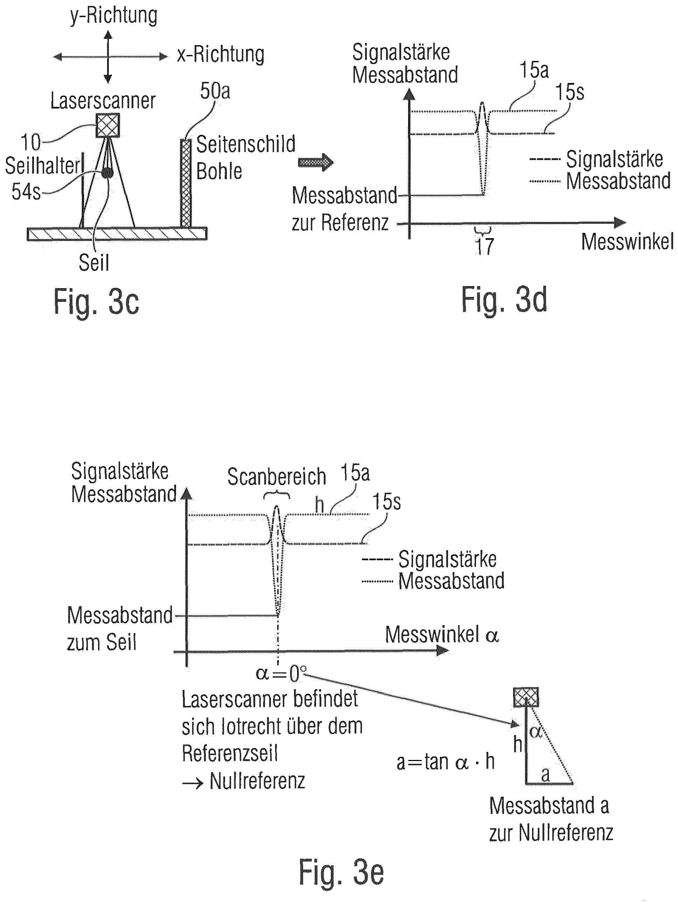

Fig. 3c illustriert die Scansituation mit einem Laserscanner 10 zur Erkennung eines unter dem Laserscanner 10 angeordneten Seils 54s. Hierbei ist der Laserscanner beispielsweise an dem Seitenschild der Bohle 50a angeordnet. Bei einer derartigen Messung ergibt sich der in Fig. 3d dargestellte Signalverlauf. Wie hier zu erkennen ist, fallen in dem Scanbereich 17 wiederum Minimum und Maximum von Signalstärke 15a und Messabstand 15s zusammen, so dass hier die Position des Seils bzw. Messwinkel für das Seil detektiert werden kann.

Die Auswertung vom Referenzseil 54s von oben besitzt für einen relativ großen Scanwinkel (30° bis 50°) Messwerte mit hohen Signalamplituden, wobei ein Messwertsprung (Messwerte schlagartig kleiner) direkt über dem Referenzseil auftritt. Fig. 3c zeigt die prinzipielle Anordnung vom Laserscanner 10 und Scanbereich 17, während Fig. 3d den dazugehörigen Signalverlauf illustriert. Zu beachten ist hierbei, dass der Messabstand zum Seil in Y- Richtung gemessen wird. Für die Regelung wird jedoch ein Abstandswert in X-Richtung benötigt. Hierzu muss wie in Abbildung 3c dargestellt eine Umrechnung erfolgen.

Insofern wird bei diesem Ausführungsbeispiel nicht ausschließlich der Abstandswert resultierend aus dem Messwert 15a zur Abstandsbestimmung verwendet, sondern der Abstand mittels folgender Berechnung bestimmt. Die Berechnung wird nachfolgend anhand von Fig. 3e erläutert. Fig. 3e zeigt das Diagramm aus Fig. 3d, anhand welches ersichtlich ist, dass Messwerte 15a und 15s unter der Position $\alpha = 0$ Grad zusammenfallen. Durch den Messwert 15a ist der Abstand zum Seil bzw. die Höhe h über dem Seil bestimmbar. Insofern befindet sich also der Laserscanner 10 lotrecht über dem Seil 54s, wodurch bei diesem Ausführungsbeispiel die Nullreferenz, d. h. der Messwert hat an dieser Stelle den Wert $\alpha = 0$, festgelegt wird. Ändert sich nun der Winkel zu dem Seil, kann der Abstand a anhand der Formel $a = \tan \alpha \cdot h$ bestimmt werden, wie anhand von Fig. 3e illustriert ist. Der so ermittelte Abstandswert a liefert in X- Richtung den Abstand zur Nullreferenz.

Während die Nullreferenz im Laserscanner festgelegt wird, muss der Laserscanner beim Einrichten so installiert werden, dass der Abstandswert a möglichst nahe bei null liegt. Der so ermittelte Abstandswert in X-Richtung kann dann als Regelgröße verwendet werden.

Insofern unterscheidet sich die Verwendung des Seils als seitliche Referenz von der Verwendung des Seils als Referenz bei einer Messung von oben, vor allem durch die Berechnung der Regelgröße, nicht aber durch das sich bei der Erkennung des Objekts einstellendes Signalmuster.

Fig. 4a illustriert die Mustererkennung einer Fräskante 54k mittels des Laserscanners 10 von der Seite. Der Laserscanner 10 scannt beispielsweise wiederum einen Scanbereich von 15 bis 45 Grad oder von 15 bis 30 Grad ab.

Auch eine Fräskante 54k liefert ein spezielles Muster, mit dessen Hilfe man den Abstand zur Fräskante 54k eindeutig bestimmen kann. Dies soll in Fig. 4b derart erläutert werden, dass das Muster der Fräskante über nacheinander folgende gleiche Messwerte mit einer relativ hohen Signalamplitude erkennbar ist. Betrachtet man die in Abbildung 4b dargestellten Signalverläufe der Signalstärke 15s und des Messabstands 15a, so wird die spezielle Mustererkennung der Signalverläufe deutlich. Ein entsprechender Erkennungs- bzw. Auswertungsalgorithmus erkennt die leichte Überhöhung der Signalstärke 15sp in dem Scanbereich 17, der den Messwinkel für die Fräskante 54h repräsentiert. Additiv oder alternativ kann der Auswertealgorithmus auch noch annähernd gleiche Abstandswerte 15a in diesem Scanbereich 17 erkennen. Insofern besteht also die Mustererkennung einer Fräskante von der Seite darin, eine seitliche Überhöhung (vgl. Bezugszeichen 15s) wie bei der Signalstärke und/oder ein Plateau 15ap für den Abstandsmesswert 15a zu erkennen, wobei 15sp und 15ap im Wesentlichen im gleichen Messbereich/Winkelbereich 17 auftreten. Das Plateau 15ap stellt auch gleichzeitig den auszuwertenden Messabstand zur Fräskante dar.

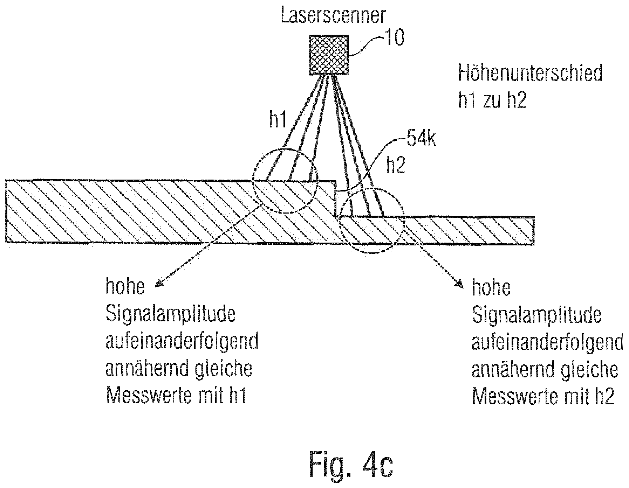

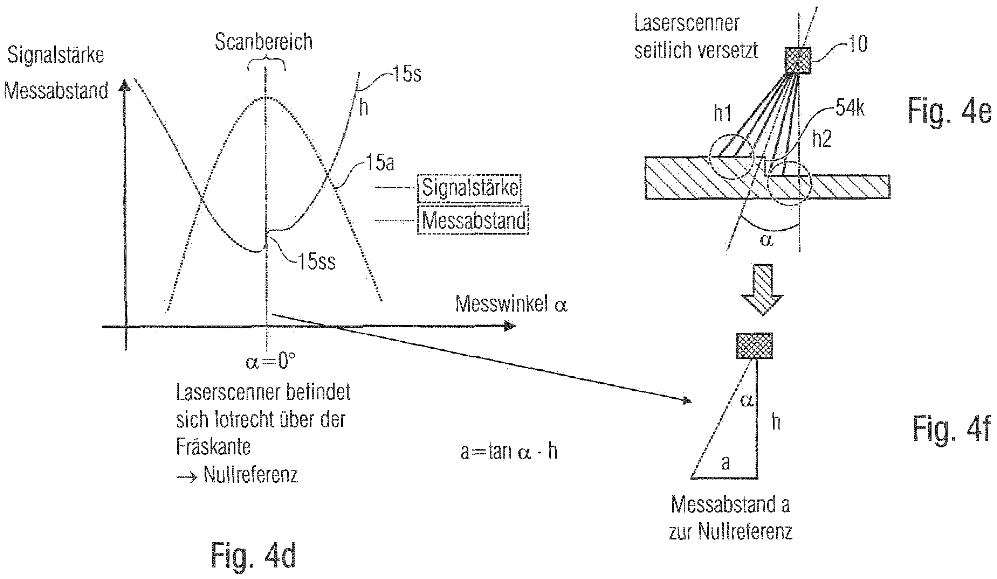

Bezugnehmend auf Fig. 4c wird die Mustererkennung einer Fräskante 54k von oben erläutert. Hierzu ist der Laserscanner 10 oberhalb der Fräskante 54k angeordnet. Der resultierende Signalverlauf ist in Fig. 4d dargestellt. Wie anhand von Fig. 4d zu erkennen ist, ergibt sich bei Auswertung der Fräskante 54k von oben ein relativ großer Scanwinkel (z.B. 30° bis 50°) von Messwerten zur Signalstärke 15s und zum Messabstand 15a mit hoher Signalamplitude. Bei der Signalstärke 15s ist an der Position der Fräskante ein Messwertsprung 15ss von h1 auf h2 zu verzeichnen. Dieser Sprung liefert die exakte Position der Fräskante in Bezug auf den Messwinkel (hier: $\alpha$ = 0 Grad). Entscheidend neben den Abstandswerten ist der Scanwinkel, bei dem der Höhensprung von h1 nach h2 auftritt. Die Abstandsmessung dient hier nur zur Erkennung der Abstandsänderung von h1 auf h2. Wenn man davon ausgeht, dass der

Winkel $\alpha$ = 0 Grad oder ein beliebiger Winkel im Messbereich als Referenzwert genommen werden, muss bei diesem Anwendungsfall nicht der Abstand, sondern der Scanwinkel, an welchem der Höhensprung auftritt, konstant gehalten werden. Entsprechend einer Alternative kann auch der Scanwinkel in einen Abstandswert (lateraler oder vertikaler Abstand) umgerechnet werden, wie anhand von Fig. 4e und 4f ersichtlich wird. Bei Fig. 4e ist die Situation aus Fig. 4c dargestellt, wobei jedoch der Scanner 10 nicht senkrecht oberhalb, sondern seitlich versetzt gegenüber der Fräskante 54k angeordnet ist. Hierdurch stellt sich also ein Winkel $\alpha$ (Winkel des Sprungs) ein. Ausgehend von der Formel a = $\tan(\alpha) \cdot$ h mit a gleich der Abstand und h gleich die Höhe (vgl. Fig. 4f) kann der laterale Abstand ermittelt werden.

Sowohl für die Variante aus Fig. 4c als auch für die Variante aus Fig. 4e ist für die Abstandsberechnung zur Referenz das Signalmuster aus Fig. 4d relevant. Befindet sich der Laserscanner 10 lotrecht über der Fräskante 54s, so legt man hier die Nullreferenz fest, d. h. der Messwinkel hat an dieser Stelle den Wert $\alpha$ = 0 Grad. Befindet sich der Laserscanner 10 nicht lotrecht über der Referenz (hier Fräskante 54k mit Versatz nach oben rechts), so ändert sich der Messwinkel $\alpha$ in Bezug zur Nullreferenz. Der Messabstand zur Referenz kann daher wie der Tangenswert berechnet werden, so dass der so ermittelte Abstandswert a in X-Richtung (lateral) den Abstand zur Nullreferenz darstellt. Während die Nullreferenz im Laserscanner festgelegt wird, so soll der Laserscanner 10 beim Einrichten so installiert werden, dass der Abstandswert a möglichst nahe bei null liegt.

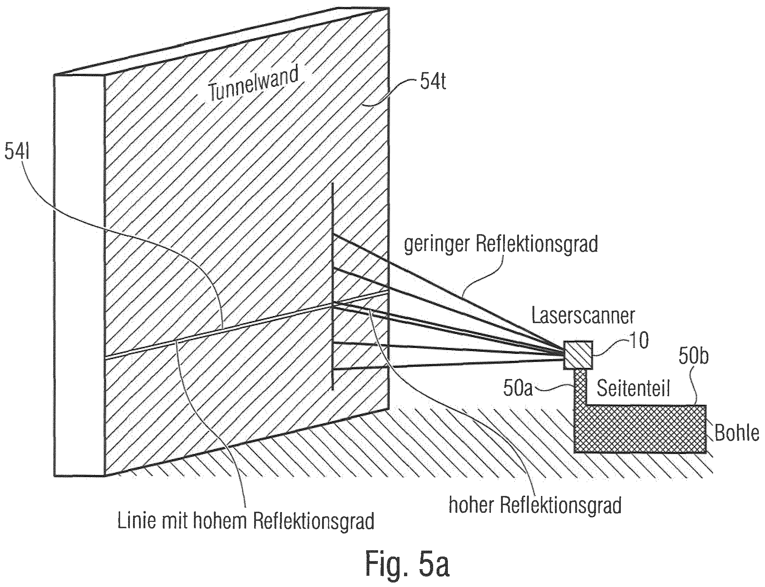

Nachfolgend wird Bezug nehmend auf Fig. 5a eine Mustererkennung einer Linie 54l, z. B. an einer Tunnelwand 54t erläutert.

Fig. 5a zeigt eine auf einer Bohle bzw. im ausfahrbaren Teil 50a der Bohle 50b angeordneten Laserscanner, dessen Messbereich derart ausgerichtet ist, dass er die Tunnelwand 50t seitlich abtastet. Die an der Tunnelwand 50t angebrachte Referenzlinie 54l liefert ebenfalls ein spezielles Muster, mit dessen Hilfe man den Abstand zwischen der Referenzlinie 54l und dem Laserscanner 10 eindeutig bestimmen kann. Dabei bezieht sich das hier beschriebene Beispiel auf eine helle (beispielsweise weiße) Referenzlinie 54l auf dunklem Hintergrund (beispielsweise eine Betonwand 54t). Es sei lediglich der Vollständigkeit darauf hingewiesen, dass mit der beschriebenen Mustererkennung auch eine dunkle Linie 54l (beispielsweise schwarze oder graue Linie) auf hellem Hintergrund 54t erkannt werden kann, wobei sich eine Darstellung eines Signalverlaufs dann im Wesentlichen umkehrt.

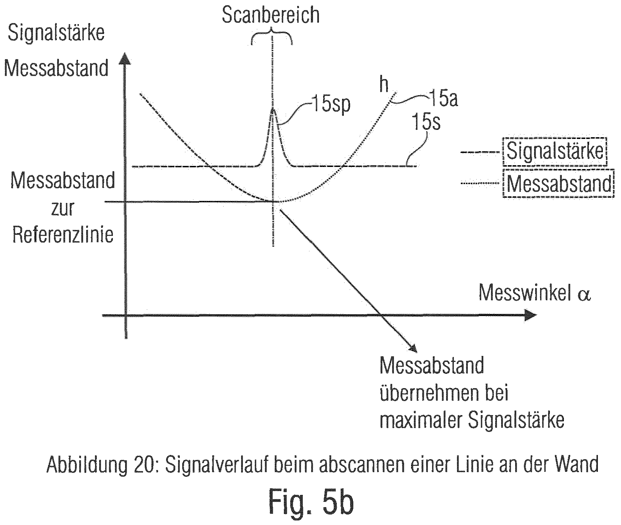

Fig. 5b zeigt den Signalverlauf von der Signalstärke 15a und dem Messabstand 50a aufgetragen über dem Messwinkel $\alpha$. Der Messvektor mit der höchsten Signalstärke 50s wird als Abstandswert zur Referenz genommen, da eine peakförmige Änderung (Maximum) der Signalstärke 15s (vgl. Bezugszeichen 15sp) aus der Reflexion an der Linie mit dem höheren Reflexionsgrad 54l herrührt. Der Abstand unter diesem Messwinkel wird als Abstandsmesswert genommen (unabhängig, ob hier ein Maximum von 15a vorliegt oder nicht).

Bei oben erläutertem Ausführungsbeispiel wurde davon ausgegangen, dass immer ein Messwert zur Ermittlung des Abstands oder des Winkels genommen wurde. Entsprechend bevorzugtem Ausführungsbeispiel erfolgte jedoch die Messung kontinuierlich, d. h. über die Zeit, in der sich der Straßenfertiger auch fortbewegen kann. Um die Messwerte entsprechend zu berücksichtigen, insbesondere die Messwerte, die an derselben Position genommen wurden, kann eine Mittelung erfolgen, wie nachfolgend erläutert wird.

Es werden diejenigen n-Messwerte selektiert, die nacheinander annähernd den gleichen Abstandswert liefern, wobei aus diesen Messwerten ein Mittelwert gebildet wird. Folgende Gleichung liegt der Berechnung zu Grunde:

$$\overline{Abstand} = L = \frac{\sum_{i=0}^{n} li}{n}$$

li = Abstandswert der jeweiligen Messung
i = Anzahl der Messungen
n = Anzahl der aufeinanderfolgenden annähernd gleichen Messungen
L = mittlerer Abstandswert zur Referenzkontur

Da nun direkt oder gemittelt der Abstand bzw. ein Winkel als Referenz vorhanden ist, kann ausgehend von dem ermittelten Abstand bzw. dem ermittelten Winkel eine Regelung entweder der Quersteuerung des Fertiges oder der Breitensteuerung der Bohle oder auch eine Höhennivellierung der Bohle erfolgen. Deshalb umfasst ein weiteres Ausführungsbeispiel eine Steuervorrichtung 14 (vgl. Fig. 6a), die ausgebildet ist, beispielsweise das ausfahrbare Teil der Bohle derart nachzuführen, dass der Abstand zur Referenz oder der Messwinkel gegenüber der Referenz konstant bleibt. Wie in Fig. 6a gezeigt ist, erhält die Steuervorrichtung 14 den Messabstand zur Referenz oder in dem entsprechenden Winkel der Auswerteeinheit 12. Entsprechend einem weiteren Ausführungsbeispiel kann eine Steuerung dazu ausgebildet sein, um den Straßenfertiger derart zu steuern, dass der Abstand zur Referenz konstant bleibt. Folglich werden also die Abstandswerte oder Winkelwerte in Bezug zu einer Referenzkontur einer Lenkungssteuerung zugeführt, die den Fertiger so steuern, dass der Fertiger möglichst parallel zur Referenzkontur den Asphalteinbau durchführt. Ferner kann die Steuerung dazu ausgebildet sein, um eine Höhennivellierung der Bohle vorzunehmen, d. h. die Bohle in ihrer Höhenlage zu regeln bzw. zu nivellieren.

Wie Bezug nehmend auf Fig. 6a dargestellt, kann der oder die Laserscanner 10 mit der Auswerteeinheit 12 über ein CAN-Bus, RS232 oder Ethernet oder dergleichen verbunden sein. Ebenso kann die Auswerteeinheit über den CAN-Bus mit der Steuereinheit 14 verbunden sein. An dieser Stelle sei angemerkt, dass beispielsweise der Regelkreis für die Bohle eine eigene Auswerteeinheit der Steuervorrichtung aufweisen kann, wie der Regelkreis für die Lenkungssteuerung.

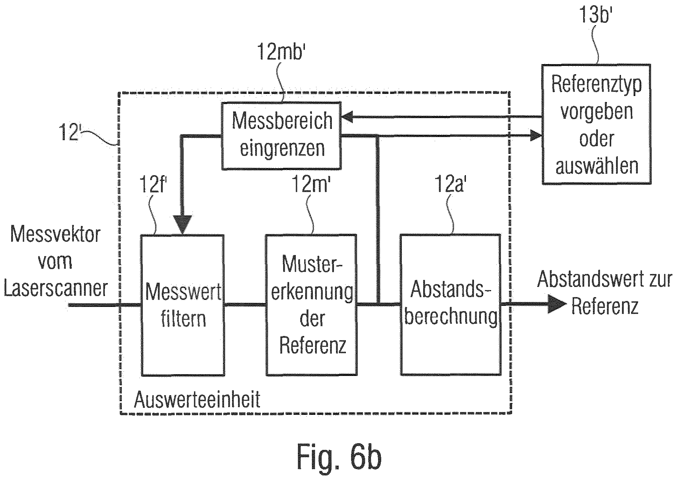

Bezugnehmend auf Fig. 6b wird die Auswerteeinheit im Detail erläutert. Fig. 6b zeigt die Auswerteeinheit 12'. Die Auswerteeinheit 12' umfasst ein Messwertfilter 12f', der die von den einen oder mehreren Laserscannern eingehenden Messsignale filtert.

Entsprechend Ausführungsbeispielen kann die Messwertfilterung wie folgt erfolgen: In der Auswerteeinheit werden die einzelnen Messvektoren zunächst in einem ersten Schritt auf ihre Signalamplitude hin untersucht. Dabei werden nur die Messvektoren berücksichtigt, die sich in dem vorgegebenen Messbereich befinden und zusätzlich eine hohe Signalamplitude (hoher Reflexionsgrad) besitzen. Geringe Signalamplituden bzw. ein kleiner Reflexionsgrad ist ein Indiz dafür, dass der Messwert nicht zum näheren Scanbereich der Referenz gehört.

Additiv oder alternativ kann die Messwertfilterung wie oben erläutert zur Mittelung über mehrere Messwerte in diesem Messwertfilter 12f' durchgeführt werden.

Von dem Messwertfilter 12f' werden die Messwerte an die Mustererkennung 12m' übergeben, die dann, wie oben bereits erläutert, ein Objekt, wie z. B. eine Fräskante oder ein Seil oder eine Linie als Muster erkennt. Welches Objekt als Muster erkannt wird, wird mittels einer Benutzerschnittstelle festgelegt, was hier anhand des Blocks 13b' illustriert ist. Die Benutzerschnittstelle kann beispielsweise in die Steuerung des Straßenfertigers integriert ein. Über die Benutzerschnittstelle 13b' wird das jeweils gesuchte Muster ausgewählt und insbesondere auch der Messbereich eingegrenzt. Diese Messbereichseingrenzung erfolgt mittels des Messbereichsbegrenzer 12mb', der sein Input von der Benutzerschnittstelle 13b' erhält. Der Hintergrund ist, dass typischerweise die oben erläuterten Laserscanner einen recht großen Winkelbereich abdecken und somit gleichzeitig ein auf Höhe des Laserscanners gespanntes Seil (19 Grad gegenüber 10bv aus Fig. 6c) sowie eine Fräskante unter einem niedrigeren Winkel (z. B. 60 Grad gegenüber 10bv aus Fig. 6c) erfassen kann. Mittels dem Messbereicheingrenzer 12mb' wird dann der Winkelbereich entsprechend der vorgewählten Referenz eingegrenzt. Das Eingrenzen erfolgt beispielsweise derart, dass der am Eingang der Auswerteeinheit 12' angeordnete Messfilter f' nur Werte mit einem Winkelbereich größer x1 und kleiner x2 an dem Mustererkenner 12m' weiterleitet. Darüber hinaus weist die Auswerteeinheit noch eine Abstandsberechnung 12a' auf, die entweder ausgehend von dem Abstandsmesswert (typischerweise Auswertung der Laufzeit) ein Abstand zu einem Objekt direkt bestimmt oder den Abstand ausgehend von einem detektierten Winkel des zu suchenden Musters berechnet. Durch die Einheit 12a' werden dann die Abstandswerte zur Referenz ausgegeben.

Entsprechend Ausführungsbeispielen ist die Auswerteeinheit 12' dazu ausgebildet, anhand der kontinuierlich gemessenen Abstandsvektoren die Referenzkontur zu erfassen, und den Abstand zur Referenz zu berechnen. Da all die oben erläuterten Operationen insbesondere im Digitalen erfolgen, umfasst die Auswerteeinheit 12' hauptsächlich einen Mikrocontroller, welcher über eine Schnittstelle, wie z. B. eine serielle Schnittstelle (CAN, RS232 oder Ethernet oder dergleichen), die Messvektoren vom Laserscanner übertragen bekommt.

Wie bereits oben erläutert, ist die Auswerteeinheit 12', insbesondere ausgehend von den Funktionsblöcken 13b' und 12mb' sowie auch 12m' dazu ausgebildet, unterschiedliche Referenzmuster zu erkennen. Dies kann entweder automatisch oder optional auch über die Eingabe eines Bedieners (vgl. Funktionsblock 13b') erfolgen, über die der Messbereich (vgl. 12mb') eingegrenzt wird.

Entsprechend einem weiteren Ausführungsbeispiel erfolgt die Auswahl der Referenz wie folgt: Der Laserscanner tastet zunächst die möglichen Referenzstellen (z.B. Fräskante, Seil, Referenzlinie an der Wand) ab und identifiziert die vorhandene Referenz oder Referenzen. Sind mehrere Referenzen (z.B. Seil und Fräskante) vorhanden, so obliegt es dem Anwender über eine entsprechende Eingabe die gewünschte Referenz (Seil oder Fräskante) auszuwählen. Ist somit eine eindeutige Referenz festgelegt worden, wird der Scanbereich für die ausgewählte Referenz eingegrenzt, so dass der Sensor auch auf die ausgewählte Referenz fixiert ist und kein Springen zwischen Referenzen entstehen kann. Die Eingrenzung vom Messbereich hat außerdem den Vorteil, dass die Auswertung der einzelnen Messvektoren auf ein Minimum reduziert wird und dadurch der Auswertealgorithmus beschleunigt und Störgrößen erheblich unterdrückt werden.

Bei obigem Ausführungsbeispiel wurde davon ausgegangen, dass diese sich auf Abstands/Lenksensoren für Straßenfertiger beziehen. Da hier ein Sensorsystem erläutert wird, ist dieses selbstverständlich auch bei anderen Maschinen, wie z. B. anderen Baumaschinen, z. B. einen Grader oder einer Verdichtungswalze einsetzbar. Beim Grader wird mit oben erläuterten System entweder die Lenkung oder auch die Positionierung des verschiebbaren Werkzeugs quer zur Fahrtrichtung (analog Positionierung der Bohle bzw. Breitenregelung der Bohle) oder auch eine Höhennivellierung des Werkzeugs überwacht und/oder gesteuert. Insofern eignet sich die Vorrichtung zur Positionsbestimmung des Gesamtfahrzeuges (Baumaschine allgemein) insbesondere quer zur Fahrtrichtung für Lenkungszwecke und/oder zur Positionsbestimmung sowie Nivellierung des verschiebbaren / ausfahrbaren Werkzeugs (quer zur Fahrtrichtung) für die Steuerung des Werkzeugs. An dieser Stelle sei noch einmal darauf hingewiesen, dass ein besonderer Vorteil aller oben erläuterter Implementierungen darin besteht, dass ein und derselbe Lasersensor für unterschiedliche Einsatzzwecke, nämlich einer als Lenksensor direkt am Fertiger bzw. an der Baumaschine und ein anderes Mal als Sensor für die Bohle bzw. allgemein für ausfahrbare Maschinenteile eingesetzt werden kann sowie als Sensor in der Verwendung zur Höhennivellierung der Bohle, unabhängig, ob die zu suchende Referenz seitlich, schräg seitlich oder unten angeordnet ist. Der Messbereich bzw. der potenzielle Ort des zu erkennenden Objekts wird über die Ausrichtung des Messsensors und/oder über die Beschränkung des Messbereichs festgelegt. Von einer anderen Seite betrachtet, schafft das hier erläuterte Messsystem bzw. Mess- und Steuerungssystem die Basis für das autonome Fahren von Baumaschinen.

Auch wenn in Ausführungsbeispielen davon ausgegangen wurde, dass diese alle als Vorrichtung implementiert sind, so sei an dieser Stelle darauf hingewiesen, dass sich ein weiteres Ausführungsbeispiel auf ein entsprechendes Verfahren bezieht, das beispielsweise auf dem Mikrocontroller der Auswerteeinrichtung 12' ausgeführt sein kann. Das Verfahren umfasst die Basisschritte des Erkennens eines Musters (automatisch oder in Abhängigkeit einer Benutzereingabe). Die Mustererkennung erfolgt entsprechend Ausführungsbeispielen wie oben erläutert und kann je nach genauer Implementierung seitlich angeordnete Muster wie z. B. ein Seil oder auch eine Linie sowie seitlich schräg angeordnete Muster, wie eine Fräskante erkennen. Des Weiteren kann das Verfahren der Mustererkennung auch Schritte des Erfassens eins Seils oder einer Fräskante von oben umfassen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahingehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahingehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahingehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Sensorsystem (1) für eine Baumaschine, insbesondere einen Straßenfertiger (50),
   mit folgenden Merkmalen:

   einem ersten Laserscanner (10), der auf der Baumaschine anordenbar ist und ausgebildet ist, um einen vorgegebenen Winkelbereich nach Objekten abzusuchen und um entsprechende Abstandswerte, die den Abstand zu den ein oder mehreren Objekten beschreiben, zusammen mit entsprechenden Intensitätswerten, die eine Intensität einer sich an den ein oder mehreren Objekten einstellenden Reflexion beschreiben, über Winkel des vorgegebenen Winkelbereichs zu ermitteln,
   eine Auswerteeinheit (20), die ausgebildet ist, um ausgehend von den ermittelten Abstandswerten und den ermittelten Intensitätswerten sowie einem bekannten Muster, umfassend Abstandswerte und Intensitätswerte über Abtastwinkel, ein Objekt als Referenz (54, 54s, 54k) zusammen mit einem zugehörigen Winkel α zu erkennen,
   und
   die ausgebildet ist, einen Abstand zu der Referenz (54, 54s, 54k) und den Winkel α gegenüber der Referenz (54, 54s, 54k) zu bestimmen; wobei die Auswerteeinheit (20) ausgebildet ist, um anhand von unterschiedlichen bekannten Mustern unterschiedliche Typen von den Objekten als Referenz (54, 54s, 54k) zu erkennen; wobei das als Referenz zu erkennende Objekt ein Seil (54s) ist und/oder wobei die Auswerteeinheit (20) ausgebildet ist, um eine Kante (54k), insbesondere eine Fräskante oder Bordsteinkante zu erkennen und/oder wobei die Auswerteeinheit (20) ausgebildet ist, um eine Linie (54l) in einer seitlichen Perspektive an einer Wand oder in einer Vogelperspektive auf einem Untergrund zu erkennen.

2. Sensorsystem (1) gemäß Anspruch 1, wobei die Auswerteeinheit (20) über eine Benutzerschnittstelle eine Benutzerauswahl erhält, die den Typ des als Referenz zu erkennenden Objekts kennzeichnet.

3. Sensorsystem (1) gemäß einem der vorherigen Ansprüche, wobei der zu bestimmende Abstand zu der Referenz (54, 54s, 54k) ein lateraler Abstand a zwischen dem Laserscanner (10) und der Referenz (54, 54s, 54k) ist.

4. Sensorsystem (1) gemäß einem der vorherigen Ansprüche, wobei die Auswerteeinheit (20) das Seil (54s) erkennt, wenn ein Maximum der Intensitätswerte in Form eines Peaks vorliegt und wenn ein Minimum der Abstandswerte in Form eines Peaks vorliegt oder wenn ein Maximum der Intensitätswerte in Form eines Peaks und ein Minimum der Abstandswerte in Form eines Peaks unter demselben Winkel im vorgegebenen Winkelbereich vorliegt.

5. Sensorsystem (1) gemäß einem der vorherigen Ansprüche, wobei die Auswerteeinheit (20) ausgebildet ist, um das Seil (54s) aus einer Vogelperspektive zu erkennen und um den Winkel α im vorgegebenen Winkelbereich zu bestimmen und insbesondere, um ausgehend von dem bestimmten Winkel α den Abstand a mit der Formel a = tan α · Höhe h zu berechnen, wobei h die Höhe des Laserscanners gegenüber der Referenz darstellt, wobei a ein lateraler Abstand zwischen dem Laserscanner (10) und der Referenz (54, 54s, 54k) darstellt; und/oder wobei die Auswerteeinheit (20) ausgebildet ist, das Seil (54s) in einer seitlichen Perspektive zu erkennen und den Abstand zu dem Seil (54s) zu bestimmen.

6. Sensorsystem (1) gemäß einem der vorherigen Ansprüche, wobei die Auswerteeinheit (20) die Kante (54k) in einer seitlichen Perspektive bestimmt, wobei die Intensitätswerte unter einem Winkelbereich des vorgegebenen Winkelbereichs eine Überhöhung ausbilden oder wobei die Abstandswerte unter einem Winkelbereich des vorgegebenen Winkelbereichs ein Plateau der Abstandswerte ausbilden oder wenn eine Kombination von einem Plateau der Abstandswerte und einer Überhöhung der Intensitätswerte in einem Winkelbereich des vorgegebenen Winkelbereichs vorliegt; und/oder

   wobei die Auswerteeinheit (20) die Kante (54k) in einer Vogelperspektive bestimmt, wobei die Abstandswerte in einem Winkel des vorgegebenen Winkelbereichs einen Sprung ausbilden oder wenn die Abstandswerte an einem Winkel des vorgegebenen Winkelbereichs ein Maximum ausbilden oder wobei die Abstandswerte in einem Winkel des vorgegebenen Winkelbereichs einen Sprung ausbilden und die Abstandswerte an dem Winkel des vorgegebenen Winkelbereichs ein Maximum ausbilden.

7. Sensorsystem (1) gemäß einem der vorherigen Ansprüche, wobei die Auswerteeinheit (20) ausgebildet ist, um ausgehend von dem ermittelten Winkel α des Winkelbereichs den Abstand a mit der Formel a = tan α · Höhe h zu bestimmen, wobei h die Höhe des Laserscanners gegenüber der Referenz darstellt, wobei a einen lateralen Abstand zwischen dem Laserscanner (10) und der Referenz (54, 54s, 54k) darstellt.

8. Sensorsystem (1) gemäß einem der vorherigen Ansprüche, wobei die Linie (54l) erkannt wird, wenn ein Maximum der Intensitätswerte in Form eines Peaks an einem Winkel des vorgegebenen Winkelbereichs in Kombination mit einem kontinuierlich variierenden Abstandswert erhalten wird.

9. Sensorsystem (1) gemäß einem der vorherigen Ansprüche, wobei die Auswerteeinheit (20) ausgebildet ist, um eine Mehrzahl von n Abstandswerten über eine Zeit oder zurückgelegte Strecke zu ermitteln oder um eine Mehrzahl von n Abstandswerten über eine Zeit oder zurückgelegte Strecke zu ermitteln und die n Abstandswerte anhand folgender Formel zu ermitteln:

$$\overline{Abstand} = L = \frac{\sum_{i=0}^{n} li}{n}$$

wobei $l_i$ der Abstandswert der jeweiligen Messung ist, i die Anzahl der Messungen, n die Anzahl der aufeinanderfolgenden Messungen und L der mittlere Abstandswert zur Referenz (54, 54s, 54k).

10. Sensorsystem (1) gemäß einem der vorherigen Ansprüche, wobei das Sensorsystem (1) eine Steuerung aufweist, die ausgebildet ist, ausgehend von dem Abstand zu der Referenz (54, 54s, 54k) und/oder dem Winkel $\alpha$ gegenüber der Referenz (54 54s, 54k) die Lenkung der Baumaschine zu steuern, insbesondere unter Berücksichtigung des Abstands des Laserscanners (10) zu einem Maschinenfixpunkt der Baumaschine; wobei entweder der erste Laserscanner (10) seitlich im Bereich einer Vorderseite der Baumaschine angeordnet ist; oder der erste Laserscanner seitlich an einer bezüglich einer Bohle (50b) des Straßenfertigers (50) gegenüberliegenden Seite des Straßenfertigers (50) angeordnet ist; oder der erste Laserscanner (10) auf einem ausfahrbaren Teil einer Bohle (50b) des Straßenfertigers (50) anordenbar ist; oder das Sensorsystem (1) ferner einen zweiten oder einen zweiten, dritten und vierten Laserscanner (10) aufweist und der erste Laserscanner (10) auf dem Straßenfertiger (50) auf einer ersten Seite des Straßenfertigers (50) und der zweite Laserscanner auf einem ausfahrbaren Teil einer Bohle (50b) auf der ersten Seite angeordnet ist.

11. Sensorsystem (1) gemäß Anspruch 10, wobei das Sensorsystem (1) eine Steuerung aufweist, die ausgelegt ist, die ausfahrbaren Teile der Bohle (50b) oder die Bohle (50b) ausgehend von dem Abstand zu der Referenz (54, 54s, 54k) und/oder dem Winkel $\alpha$ gegenüber der Referenz (54, 54s, 54k), insbesondere ausgehend von einem vertikalen Abstand zu der Referenz, zu steuern, insbesondere, sofern das Sensorsystem den zweiten Laserscanner gemäß Anspruch 10 aufweist, unter Berücksichtigung der Abstände des ersten und zweiten Laserscanners (10) zu einem Maschinenfixpunkt der Baumaschine.

12. Baumaschine, insbesondere Straßenfertiger (50), mit einem Sensorsystem (1) gemäß einem der vorherigen Ansprüche.

13. Verfahren zur Ermittlung eines Abstands zu einer Referenz (54, 54s, 54k) und eines Winkels $\alpha$ gegenüber der Referenz (54, 54s, 54k) unter Verwendung eines ersten Laserscanners (10), der auf einer Baumaschine angeordnet ist und ausgebildet ist, um einen vorgegebenen Winkelbereich nach Objekten abzusuchen und um entsprechende Abstandswerte, die den Abstand zu den ein oder mehreren Objekten beschreiben, zusammen mit entsprechenden Intensitätswerten, die eine Intensität einer sich an den ein oder mehreren Objekten einstellenden Reflexion beschreiben, über Winkel des vorgegebenen Winkelbereichs zu ermitteln, mit folgenden Schritten:

Erkennen eines Objekts als Referenz (54, 54s, 54k) zusammen mit einem zugehörigen Winkel $\alpha$ ausgehend von den ermittelten Abstandswerten und den ermittelten Intensitätswerten sowie von einem bekannten Muster, umfassend Abstandswerte und Intensitätswerte über Abtastwinkel, und
Bestimmen eines Abstands zu der Referenz (54, 54s, 54k) und des Winkel: $\alpha$ gegenüber der Referenz (54, 54s, 54k);
wobei anhand von unterschiedlichen bekannten Mustern unterschiedliche Typen von den Objekten als Referenz (54, 54s, 54k) erkannt werden;
wobei das als Referenz zu erkennende Objekt ein Seil (54s) ist und/oder wobei eine Kante (54k),
insbesondere eine Fräskante oder Bordsteinkante, das als Referenz zu erkennende Objekt ist und/oder
wobei eine Linie (54l) in einer seitlichen Perspektive an einer Wand oder in einer Vogelperspektive auf einem Untergrund das als Referenz zu erkennende Objekt ist.

14. Verfahren gemäß Anspruch 13, das den weiteren Schritt des Steuerns der Baumaschine oder einer Komponente der Baumaschine in Abhängigkeit des Abstands zu der Referenz (54, 54s, 54k) und/oder des Winkels $\alpha$ gegenüber der Referenz (54, 54s, 54k) umfasst.

15. Computerprogramm mit einem Programmcode zur Durchführung des Verfahrens nach Anspruch 13 oder 14, wenn das Programm auf der Auswerteeinheit nach Anspruch 1 abläuft.

**Claims**

1. A sensor system (1) for a construction machine, in particular a road finishing machine (50), comprising:

   a first laser scanner (10) that can be arranged on the construction machine and is configured to search a specified angular range for objects and to determine corresponding distance values, which describe the distance to the one or several objects, together with corresponding intensity values, which describe an intensity of a reflection resulting at the one or several objects, across angles of the specified angular range, an evaluation unit (20) configured to detect an object as a reference (54, 54s, 54k) together with an associated angle $\alpha$ starting from the distance values determined and the intensity values determined and a known pattern comprising distance values and intensity values across scanning angles, and configured to determine a distance to the reference (54, 54s, 54k) and the angle $\alpha$ with respect to the reference (54, 54s, 54k); wherein the evaluation unit (20) is configured to detect different types of the objects as a reference (54, 54s, 54k) based on different known patterns; wherein the object to be detected as a reference is a rope (54s) and/or wherein the evaluation unit (20) is configured to detect an edge (54k), in particular a milling edge or curb edge, and/or wherein the evaluation unit (20) is configured to detect a line (54l) in a lateral perspective on a wall or in a bird's eye view on a ground.

2. The sensor system (1) according to claim 1, wherein the evaluation unit (20) obtains a user selection characterizing the type of object to be detected as a reference via a user interface.

3. The sensor system (1) according to any one of the preceding claims, wherein the distance to the reference (54, 54s, 54k) to be determined is a lateral distance a between the laser scanner (10) and the reference (54, 54s, 54k).

4. The sensor system (1) according to any of the preceding claims, wherein the evaluation unit (20) detects the rope (54s) when there is a maximum of the intensity values in the form of a peak and when there is a minimum of the distance values in the form of a peak or when there is a maximum of the intensity values in the form of a peak and a minimum of the distance values in the form of a peak at the same angle in the specified angular range.

5. The sensor system (1) according to any of the preceding claims, wherein the evaluation unit (20) is configured to detect the rope (54s) from a bird's-eye view and to determine the angle $\alpha$ in the specified angular range and, in particular, to calculate the distance a starting from the determined angle $\alpha$ using the formula a = tan $\alpha$ · height h, wherein h represents the height of the laser scanner relative to the reference, wherein a represents a lateral distance between the laser scanner (10) and the reference (54, 54s, 54k); and/or wherein the evaluation unit (20) is configured to detect the rope (54s) in a lateral perspective and to determine the distance to the rope (54s).

6. The sensor system (1) according to any of the preceding claims, wherein the evaluation unit (20) determines the edge (54k) in a lateral perspective, wherein the intensity values form a superelevation under an angular range of the specified angular range, or wherein the distance values form a plateau of the distance values under an angular range of the specified angular range, or if there is a combination of a plateau of the distance values and a superelevation of the intensity values in an angular range of the specified angular range; and/or wherein the evaluation unit (20) determines the edge (54k) in a bird's eye view, wherein the distance values form a jump at an angle of the specified angular range or when the distance values form a maximum at an angle of the specified angular range or wherein the distance values form a jump at an angle of the specified angular range and the distance values form a maximum at the angle of the specified angular range.

7. The sensor system (1) according to any of the preceding claims, wherein the evaluation unit (20) is configured to determine the distance a with the formula a = tan $\alpha$ - height h starting from the determined angle $\alpha$ of the angular range, wherein h represents the height of the laser scanner relative to the reference, wherein a represents a lateral distance between the laser scanner (10) and the reference (54, 54s, 54k).

8. The sensor system (1) according to any of the preceding claims, wherein the line (54l) is detected when a maximum of the intensity values in the form of a peak is obtained at an angle of the specified angular range in combination with a continuously varying distance value.

9. The sensor system (1) according to any of the preceding claims, wherein the evaluation unit (20) is configured to determine a plurality of n distance values over a time or distance traveled or to determine a plurality of n distance values over a time or distance traveled and to determine the n distance values using the following formula:

$$\overline{distance} = L = \frac{\sum_{i=0}^{n} li}{n}$$

wherein $l_i$ is the distance value of the respective measurement, i is the number of measurements, n is the number of successive measurements, and L is the average distance value to the reference (54, 54s, 54k).

10. The sensor system (1) according to any one of the preceding claims, wherein the sensor system (1) comprises a controller configured to control the steering of the construction machine starting from the distance to the reference (54, 54s, 54k) and/or the angle $\alpha$ with respect to the reference (54, 54s, 54k), in particular taking into account the distance of the laser scanner (10) from a machine fixed point of the construction machine; wherein either the first laser scanner (10) is arranged laterally in the area of a front side of the construction machine; or the first laser scanner is arranged laterally on a side of the road finishing machine (50) opposite with respect to a plank (50b) of the road finishing machine (50); or the first laser scanner (10) can be arranged on an extendable part of a plank (50b) of the road finishing machine (50); or the sensor system (1) further comprises a second or second, third and fourth laser scanners (10) and the first laser scanner (10) is arranged on the road finishing machine (50) on a first side of the road finishing machine (50) and the second laser scanner is arranged on an extendable part of a plank (50b) on the first side.

11. The sensor system (1) according to claim 10, wherein the sensor system (1) comprises a controller configured to control the extendable parts of the plank (50b) or the plank (50b) starting from the distance to the reference (54, 54s, 54k) and/or the angle $\alpha$ with respect to the reference (54, 54s, 54k), in particular starting from a a vertical distance to the reference, in particular if the sensor system comprises the second laser scanner according to claim 10, taking into account the distances of the first and second laser scanners (10) to a machine fixed point of the construction machine.

12. A construction machine, in particular road finishing machine (50) with a sensor system (1) according to any of the preceding claims.

13. A method for determining a distance to a reference (54, 54s, 54k) and an angle $\alpha$ with respect to the reference (54, 54s, 54k) using a first laser scanner (10) arranged on a construction machine and configured to search a specified angular range for objects and to determine corresponding distance values, which describe the distance to the one or several objects, together with corresponding intensity values, which describe an intensity of a reflection resulting at the one or several objects, across angles of the specified angular range, comprising the following steps:

detecting an object as a reference (54, 54s, 54k) together with an associated angle $\alpha$ starting from the distance values determined and the intensity values determined and a known pattern comprising distance values and intensity values across scanning angles, and determining a distance to the reference (54, 54s, 54k) and the angle $\alpha$ with respect to the reference (54, 54s, 54k); wherein different types of the objects as a reference (54, 54s, 54k) are detected based on different known patterns; wherein the object to be detected as a reference is a rope (54s) and/or wherein an edge (54k), in particular a milling edge or curb edge is the object to be detected as a reference, and/or wherein a line (54l) in a lateral perspective on a wall or in a bird's eye view on a ground is the object to be detected as a reference.

14. A method according to claim 13, comprising the further step of controlling the construction machine or a component of the construction machine depending on the distance to the reference (54, 54s, 54k) and/or the angle $\alpha$ with respect to the reference (54, 54s, 54k).

15. A computer program comprising program code for performing the method of claim 13 or 14, when the program runs on the evaluation unit according to claim 1.

**Revendications**

1. Système de capteurs (1) pour une machine de chantier, en particulier un finisseur de route (50), présentant les caractéristiques suivantes :

un premier scanner laser (10) qui peut être disposé sur la machine de chantier et qui est configuré pour balayer une plage angulaire prédéfinie à la recherche d'objets et pour déterminer des valeurs de distance correspondantes qui décrivent la distance par rapport à l'objet ou aux objets, ainsi que des valeurs d'intensité correspondantes qui décrivent une intensité d'une réflexion présente sur l'objet ou les objets, pour chaque angle de la plage angulaire prédéfinie,

une unité de traitement (20) qui est configurée pour identifier un objet comme référence (54, 54s, 54k) avec un angle $\alpha$ correspondant à partir des valeurs de distance déterminées et des valeurs d'intensité déterminées ainsi que d'un modèle connu comprenant des valeurs de distance et des valeurs d'intensité pour chaque angle de balayage, et

qui est configurée pour définir une distance par rapport à la référence (54, 54s, 54k) et l'angle $\alpha$ par rapport à la référence (54, 54s, 54k), cette unité de traitement (20) étant configurée pour identifier différents types d'objets comme référence (54, 54s, 54k) à l'aide de différents modèles connus,

l'objet à identifier comme référence étant une corde (54s) et/ou l'unité de traitement (20) étant configurée pour identifier un bord (54k), en particulier un bord de fraisage ou une bordure de trottoir et/ou l'unité de traitement (20) étant configurée pour identifier une ligne (54l) dans une perspective latérale sur un mur ou dans une perspective à vol d'oiseau sur un sous-sol.

2. Système de capteurs (1) selon la revendication 1, dans lequel l'unité de traitement (20) reçoit par le biais d'une interface utilisateur une sélection d'utilisateur qui indique le type de l'objet à identifier comme référence.

3. Système de capteurs (1) selon une des revendications précédentes, dans lequel la distance à déterminer par rapport à la référence (54, 54s, 54k) est une distance latérale a entre le scanner laser (10) et la référence (54, 54s, 54k).

4. Système de capteurs (1) selon une des revendications précédentes, dans lequel l'unité de traitement (20) identifie la corde (54s) quand un maximum des valeurs d'intensité se présente sous la forme d'une crête et qu'un minimum des valeurs de distance se présente sous la forme d'une crête ou quand un maximum des valeurs d'intensité se présente sous la forme d'une crête et qu'un minimum des valeurs de distance se présente sous la forme d'une crête sous le même angle sur la plage angulaire prédéfinie.

5. Système de capteurs (1) selon une des revendications précédentes, dans lequel l'unité de traitement (20) est configurée pour identifier la corde (54s) dans une perspective à vol d'oiseau et pour déterminer l'angle $\alpha$ sur la plage angulaire prédéfinie, et en particulier pour calculer la distance a à partir de l'angle $\alpha$ déterminé avec la formule a = tan $\alpha$ . hauteur h, où h représente la hauteur du scanner laser par rapport à la référence et a représente une distance latérale entre le scanner laser (10) et la référence (54, 54s, 54k), et/où dans lequel l'unité de traitement (20) est configurée pour identifier la corde (54s) dans une perspective latérale et pour définir la distance par rapport à la corde (54s).

6. Système de capteurs (1) selon une des revendications précédentes, dans lequel l'unité de traitement (20) définit le bord (54k) dans une perspective latérale, les valeurs d'intensité formant une surélévation au-dessous d'une plage angulaire de la plage angulaire prédéfinie ou les valeurs de distance formant un plateau des valeurs de distance au-dessous d'une plage angulaire de la plage angulaire prédéfinie ou quand une combinaison d'un plateau des valeurs de distance et d'une surélévation des valeurs d'intensité se produit sur une plage angulaire de la plage angulaire prédéfinie ;et/ou dans lequel l'unité de traitement (20) définit le bord (54k) dans une perspective à vol d'oiseau, les valeurs de distance constituant un saut sous un angle de la plage angulaire prédéfinie ou les valeurs de distance constituant un maximum sous un angle de la plage angulaire prédéfinie, ou les valeurs de distance constituant un saut sous un angle de la plage angulaire prédéfinie et les valeurs de distance constituant un maximum sous un angle de la plage angulaire prédéfinie.

7. Système de capteurs (1) selon une des revendications précédentes, dans lequel l'unité de traitement (20) est configurée pour définir la distance a à partir de l'angle $\alpha$ déterminé avec la formule a = tan $\alpha$ . hauteur h, h représentant la hauteur du scanner laser par rapport à la référence et a représentant une distance latérale entre le scanner laser (10) et la référence (54, 54s, 54k).

8. Système de capteurs (1) selon une des revendications précédentes, dans lequel la ligne (54l) est identifiée quand un maximum des valeurs d'intensité est obtenu sous la forme d'une crête sous un angle de la plage angulaire prédéfinie en combinaison avec une valeur de distance variant en continu.

9. Système de capteurs (1) selon une des revendications précédentes, dans lequel l'unité de traitement (20) est configurée pour déterminer une pluralité de valeurs de distance n sur un laps de temps ou une distance parcourue ou pour déterminer une pluralité de valeurs de distance n sur un laps de temps ou une distance parcourue et déterminer les valeurs de distance n à l'aide de la formule suivante :

$$distance = L = \frac{\sum_{i=0}^{n} li}{n}$$

où $I_i$ est la valeur de distance de la mesure concernée, i le nombre de mesures, n le nombre de mesures successives et L la valeur de distance moyenne par rapport à la référence (54, 54s, 54k).

10. Système de capteurs (1) selon une des revendications précédentes, lequel système de capteurs (1) comporte une commande qui est configurée pour commander la direction de la machine de chantier sur la base de la distance par rapport à la référence (54, 54s, 54k) et/ou de l'angle $\alpha$ par rapport à la référence (54, 54s, 54k), en particulier en tenant compte de la distance du scanner laser (10) par rapport à un point fixe de machine de la machine de chantier ; dans lequel soit le premier scanner laser (10) est disposé latéralement dans la région d'une face avant de la machine de chantier, soit le premier scanner laser est disposé latéralement sur un côté du finisseur de route (50) opposé à une table (50b) du finisseur de route (50), soit le premier scanner laser (10) peut être disposé sur une partie télescopique d'une table (50b) du finisseur de route (50), ou le système de capteurs (1) comportant en outre un deuxième ou un deuxième, un troisième et un quatrième scanners lasers (10), le premier scanner laser (10) du finisseur de route (50) étant disposé sur un premier côté du finisseur de route (50) et le deuxième scanner laser sur une partie télescopique d'une table (50b) sur le premier côté.

11. Système de capteurs (1) selon la revendications 10, lequel système de capteurs (1) comporte une commande qui est configurée pour commander les parties télescopiques de la table (50b) ou la table (50b) sur la base de la distance par rapport à la référence (54, 54s, 54k) et/ou de l'angle $\alpha$ par rapport à la référence (54, 54s, 54k), en particulier sur la base d'une distance verticale par rapport à la référence, en particulier dans la mesure où le système de capteurs comporte le deuxième scanner laser selon la revendication 10, en tenant compte des distances du premier et du deuxième scanner laser (10) par rapport à un point fixe de machine de la machine de chantier.

12. Machine de chantier, en particulier finisseur de route (50), doté d'un système de capteurs (1) selon une des revendications précédentes.

13. Procédé pour la détermination d'une distance par rapport à une référence (54, 54s, 54k) et d'un angle $\alpha$ par rapport à la référence (54, 54s, 54k) en utilisant un premier scanner laser (10) qui est disposé sur une machine de chantier et configuré pour balayer une plage angulaire prédéfinie à la recherche d'objets et pour déterminer des valeurs de distance correspondantes qui décrivent la distance par rapport à un ou plusieurs objets, ainsi que des valeurs d'intensité correspondantes qui décrivent une intensité d'une réflexion présente sur l'objet ou les objets, pour chaque angle de la plage angulaire prédéfinie, à l'aide des étapes suivantes :

Identifier un objet comme référence (54, 54s, 54k) avec un angle $\alpha$ correspondant à partir des valeurs de distance déterminées et des valeurs d'intensité déterminées ainsi que d'un modèle connu comprenant des valeurs de distance et des valeurs d'intensité pour chaque angle de balayage, et définir une distance par rapport à la référence (54, 54s, 54k) et de l'angle $\alpha$ par rapport à la référence (54, 54s, 54k), selon lequel différents types d'objets sont identifiés comme référence (54, 54s, 54k) à l'aide de différents modèles connus, selon lequel l'objet à identifier comme référence est une corde (54s) et/ou selon lequel un bord (54k), en particulier un bord de fraisage, ou une bordure de trottoir est l'objet à identifier comme référence et/ou une ligne (54l) dans une perspective latérale sur un mur ou dans une perspective à vol d'oiseau sur un sous-sol est l'objet à identifier comme référence.

14. Procédé selon la revendication 13, qui comporte l'étape supplémentaire de contrôle de la machine de chantier ou d'un composant de la machine de chantier en fonction de la distance par rapport à la référence (54, 54s, 54k) et/ou de l'angle $\alpha$ par rapport à la référence (54, 54s, 54k).

15. Programme informatique avec un code de programme pour la mise en œuvre du procédé selon la revendication 13 ou 14 quand le programme est exécuté sur l'unité de traitement selon la revendication 1.

Laserebene

10

11

1

Lenksensor

Lasermodul

Auswerteeinheit

Messwert

20

Fig. 1a

EP 3 874 296 B1

Referenz für Lenkung
und/oder
Höhenregelung

52

10bh

Bohle

50b

50a

50a

10h

Lenksensor
Bohle

Straßen-
Fertiger

Seitenblech

50z

Traktor

10z

50d

54

52e

Lenksensor
Traktor

50

10v

50v

Fig. 1b

EP 3 874 296 B1

Fertiger ohne Lenkkorrektur

Fig. 1c

Fertiger zum Zeitpunkt
der Lenkkorrektur

Fig. 1d

EP 3 874 296 B1

Fig. 2a

Fig. 2b

EP 3 874 296 B1

Fig. 2c

Fig. 2d

geringer Reflektionsgrad

54s  Seil

Laserscanner

54sh

Seilhalter

hoher Reflektionsgrad

10

## Fig. 3a

Signalstärke
Messabstand

15a

------- Signalstärke

.............. Messabstand

15s

Messabstand
zur Referenz

17

Messwinkel

## Fig. 3ba

Fig. 3bb

y-Richtung

x-Richtung

Laserscanner

50a

10

Seilhalter

54s

Seitenschild
Bohle

Seil

## Fig. 3c

Signalstärke
Messabstand

15a

15s

---- Signalstärke
········· Messabstand

Messabstand
zur Referenz

17

Messwinkel

## Fig. 3d

Signalstärke
Messabstand

Scanbereich 15a

h

15s

---- Signalstärke
········· Messabstand

Messabstand
zum Seil

Messwinkel $\alpha$

$\alpha = 0°$

Laserscanner befindet
sich lotrecht über dem
Referenzseil
→ Nullreferenz

$a = \tan \alpha \cdot h$

$h$

$\alpha$

$a$

Messabstand a
zur Nullreferenz

## Fig. 3e

54k — Fräskante

Laserscanner — 10

maximale
Signalamplitude
aufeinanderfolgend
gleiche Messwerte

# Fig. 4a

Signalstärke
Messabstand

15s    15sp                        15a

Messabstand
zur Fräskante

Signalstärke
Messabstand

15ap

17                                  Messwinkel

# Fig. 4b

Laserscenner

10

Höhenunterschied
h1 zu h2

h1

54k

h2

hohe
Signalamplitude
aufeinanderfolgend
annähernd gleiche
Messwerte mit h1

hohe
Signalamplitude
aufeinanderfolgend
annähernd gleiche
Messwerte mit h2

Fig. 4c

Signalstärke
Messabstand

Scanbereich

15s

h

15a

- - - - Signalstärke
········· Messabstand

15ss

Messwinkel α

α=0°

Laserscanner befindet
sich lotrecht über der
Fräskante
→ Nullreferenz

a=tan α · h

Fig. 4d

Laserscenner
seitlich versetzt

10

h1

54k

h2

α

Fig. 4e

α

h

a

Messabstand a
zur Nullreferenz

Fig. 4f

EP 3 874 296 B1

Tunnelwand — 54t

54l

geringer Reflektionsgrad

Laserscanner

10

50b

50a

Seitenteil

Bohle

hoher Reflektionsgrad

Linie mit hohem Reflektionsgrad

Fig. 5a

EP 3 874 296 B1

Fig. 5b

Abbildung 20: Signalverlauf beim abscannen einer Linie an der Wand

Übertragung der Messvektoren

10 — Laserscanner

CAN / Ethernet

12 — Auswerteeinheit

Messabstand zur Referenz

14 — Steuerung

Fig. 6a

13b' — Referenztyp vorgeben oder auswählen

12' — 12mb' — Messbereich eingrenzen — 12m'

12f' — Messwert filtern

Muster-erkennung der Referenz

12a' — Abstands-berechnung

Abstandswert zur Referenz

Messvektor vom Laserscanner

Auswerteeinheit

Fig. 6b

Fig. 6c

Scanbereich und
Rotationsebene
vom Laserscanner

Bezugsachse für den
Scanwinkel

Referenzseil
seitliche Abtastung

54s

10

10bh

10bv

α2

α3

Fräskante

54k

54k

α1

Referenzteil
Abtastung
von oben

EP 3 874 296 B1

Fig. 7a

Laserscanner

10

fester Bezugspunkt
für die
Winkelmessung

Abstand zum Referenzdraht

b

Messbereich

Δα vom nachfolgendem Laserstrahl = 0,01°

Referenz-Draht

54s

$n_m \cdot \Delta\alpha$ wird in
Höheninformation
umgerechnet

$$h = \tan(n_m \cdot \Delta\alpha) \cdot b$$

$n_m$ = Anzahl der Winkelschritte ausgehend vom Bezugspunkt, bis der Referenzdraht detektiert wird

Fig. 7b

Fig. 7c

**IN DER BESCHREIBUNG AUFGEFÜHRTE DOKUMENTE**

**In der Beschreibung aufgeführte Patentdokumente**

- US 4647784 A
- US 9587937 B2
- DE 102011113752 A1
- US 2018164829 A1
- DE 10060903 A1
- US 2018237999 A1